# EUROPEAN PATENT SPECIFICATION

(11) **EP 4 107 416 B1**
(45) Date of publication and mention of the grant of the patent: **02.04.2025**
(21) Application number: 21708305.4
(22) Date of filing: 17.02.2021
(51) Int. Cl.: F16K 5/06, F16K 17/40, F16K 31/56, F16K 35/04

(54) **ACTUATION UNIT AND VALVE ASSEMBLY COMPRISING THE SAME**
BETÄTIGUNGSEINHEIT UND VENTILANORDNUNG DAMIT
UNITÉ D'ACTIONNEMENT ET ENSEMBLE VANNE LA COMPRENANT

(30) Priority: 17.02.2020 GB 202002123; 28.10.2020 GB 202017100
(43) Date of publication of application: 28.12.2022
(73) Proprietor: Oxford Gas Products Limited, Harwell, Oxfordshire OX11 0EY (GB)
(72) Inventor: WILKINSON, Rupert, Oxford Oxfordshire OX1 2LP (GB); ROBERTS, Andrew, Oxford Oxfordshire OX1 2LP (GB); ROBINSON, Neil, Oxford Oxfordshire OX1 2LP (GB)
(74) Representative: Dehns
(86) International application number: PCT/GB2021/050379
(87) International publication number: WO 2021/165665

(56) References cited:
- GB-A- 1 199 431
- KR-B1- 100 676 499

## Description

### Technical Field

The present invention relates to an actuation unit for a valve assembly, in particular a valve assembly that can be readily closed by a user.

### Background to the Invention

Emergency control valves (ECVs), such as those used on domestic gas supply lines, can be difficult to operate by lay people, especially those with physical disabilities.

Typical ECV shut-off arrangements, known in the art *per se,* generally require special modifications, e.g. to the valve, gas meter, gas infrastructure, etc. For example some previous approaches to make operating an ECV easier have utilised a solenoid-based actuator. However, these are not generally easy to retro-fit to an existing installation. Moreover, a solenoid-based actuator, together with other actuators that require the use of electricity to actuate the ECV, are unsuitable for many gas applications due to the risk of fire or explosion.

In various applications, more generally, it may be desirable to improve the ease of actuation for a valve in a fluid supply line. In many environments, it can be difficult even for a trained service person to access a valve and apply the necessary torque to close the valve.

The present invention seeks to enable those with physical impairments to close off their gas ECV in case of emergency, without the use of electricity. Furthermore, the present invention seeks to assist with valve actuation across a range of applications.

KR 100676499 describes a safety valve for automatic closing and switching of a valve upon the detection of a fire.

### Summary of the Invention

In accordance with aspects, the present invention provides an actuation unit for a valve assembly as defined by claim 1 and a valve assembly as defined by claim 15.

Thus it will be appreciated that embodiments of the present invention provide an improved valve assembly in which the valve is retained in the open position until a triggering force is applied by a user. Once triggered, the 'spring-loaded' actuation unit biases the valve to the closed position automatically, i.e. the user does not need to apply any torque to close off the valve. The valve can then be reset by applying a restorative torque in the opposite direction to bring the valve back to the open position, where it is held by latching the driving member. The valve is only latched in the open position when the valve is fully opened (i.e. in the open position). If the restorative torque restores the valve to some intermediate position between the closed and open positions, the latching mechanism has no effect and thus the torque spring biases the valve back to the closed position when the insufficient external torque is no longer applied.

In other words, the force for closing the valve is 'de-coupled' from the force required to open the valve. A user may simply operate the trigger member, which acts to force the valve closed by releasing the torque of the torsion spring. This may be particularly advantageous for users with physical impairments, however it has been appreciated that this may also generally make shutting off the valve easier in installations in which physical access to the valve is restricted (e.g. in closed or unusually shaped spaces).

It will be appreciated that the term 'open position' means that the valve is substantially open, preferably fully open, thereby allowing flow of fluid through the valve. Similarly, the term 'closed position' means that the valve is substantially closed, preferably fully closed, thereby preventing flow of fluid through the valve. Thus the actuation device latches only when the valve is in a position in which the valve is effectively fully open, and does not latch at any intermediate position.

The valve itself may be a new valve that is fitted together with the actuation unit, however the actuation unit may be supplied alone and can be 'retro-fitted' to existing valves that are already *in situ,* e.g. an existing gas supply valve in a domestic application.

In some embodiments, the valve assembly may make an audible sound when it biases the valve to the closed position. The audible sound may be the sound of a button 'popping up', or may be made by a sonorous component, such as a sonorous metal component (e.g. a bell). This may be beneficial to allow the user to know that the valve has been closed. With a sufficiently audible sound, a telephone operator (e.g. at a remote assistance centre) may be able to hear the valve shut off over the phone so that they are satisfied that the flow of fluid (e.g. domestic gas) has been stopped.

Generally speaking, and in preferred embodiments, the external force required to release the driving member is less than the force that would be required to manually close the valve. Release of the driving member from the latching mechanism allows a relatively large amount of stored energy (i.e. from the torsion spring) to be applied to the operating member of the valve for a potentially relatively small amount of input energy from the user (i.e. to operate the trigger member).

Embodiments in which the force required to close the valve is reduced may be particularly advantageous. However, additionally or alternatively, in some advantageous embodiments the external force applied to the trigger member is a non-rotary force. Some physical impairments may significantly affect the ability of a user to apply a twisting motion (e.g. to twist a valve handle), while the ability to apply a non-rotary force (such as a push or a pull) may not be as severely impaired. Of course, in a set of embodiments, a non-rotary external force may advantageously be less than the rotary force (i.e. the 'first torque') that closes the valve. The non-rotary force may, for example, be a linear force. This non-rotary force may be instantaneous, rather than a continual pushing in of the button, i.e. it is a 'binary' system such that once a sufficient non-rotary force is applied to the trigger member, the valve is triggered closed.

The Applicant has appreciated a number of mechanisms for an externally applied non-rotary force to release the driving member. In some embodiments, the trigger member comprises a button, wherein the driving member is released when the button is pressed. A button may be preferred due to the ease with which a user can press it.

The button itself may comprise a trigger spring arranged to return the button to a normal position after it has been pressed. It will be appreciated that the 'spring' may be any resilient member applying a bias force (e.g. an elastomeric or coil spring). The trigger spring, which may be a compression spring, may also advantageously determine (at least partially) the magnitude of the external force required to trigger the actuation unit into closing the valve, as the force of the trigger spring must be overcome when pressing the button. In some embodiments, a selection of spacers - which may include washers or other suitable components having a particular height or selection of heights - may be added in-line with the trigger spring to 'fine-tune' the amount of force needed to actuate the button. Additionally or alternatively, a nut may be loosened or tightened to adjust the height so as to influence the magnitude of the external force required to trigger the actuation unit into closing the valve. Additionally or alternatively, the trigger spring may be selected from a plurality of trigger springs each having a different respective spring constant. Thus the actuation device may be supplied in a kit together with a choice of trigger springs to allow for fine-tuning of the external force required to trigger the actuation unit into closing the valve.

The button may be positioned conveniently with respect to the actuation unit so as to allow easy access for the user. In some such embodiments, the trigger member comprises a top button positioned such that the top button is actuated by applying a longitudinal force to the top button in a direction parallel to the axis of the valve. In a set of such embodiments, the longitudinal force is to be applied along the axis of the valve, i.e. a coaxial force applied to the top button releases the driving member. Thus, in such embodiments, the axial movement of the button releases the latching mechanism. For example, the driving member may be displaced axially relative to the housing of the actuation unit so as to release the driving member and allow the first torque (from the torsion spring) to drive the valve closed.

In some potentially overlapping embodiments, the trigger member comprises a side button positioned such that the side button is actuated by applying a lateral force to the side button perpendicular to the axis of the valve. In some embodiments, the trigger member comprising a pair of side buttons arranged on opposite sides of the actuation unit. This may, for example, provide a mechanism in which the user 'squeezes' the sides of the unit in order to close the valve. The side button (or each side button) may be a lever. In some such examples, the driving member may be displaced laterally relative to the housing of the actuation unit so as to release the driving member and allow the first torque (from the torsion spring) to drive the valve closed.

Where a button is provided, the button may be located within a button housing. In some embodiments, the latching mechanism may comprise the button housing. Thus, in such embodiments, the driving member may be retained by the button housing until the button is actuated, which may, for example, move the driving member relative to the button housing so as to release the driving member from the latching mechanism.

In addition to buttons, there are other triggering mechanisms that may be used. For example, in some potentially overlapping embodiments, the trigger member comprises a pull tab. The pull tab may, in some embodiments, also provide a latch member against which the driving member is held when held by the latching mechanism, wherein a lateral movement of the pull tab releases the driving member.

Such a pull tab may be pulled from the latched position manually, for example by gripping the tab and pulling it. However, in some embodiments a cord is attached to the pull tab, wherein pulling the cord applies the external force to the pull tab.

However, in some embodiments, the pull tab is attached to a Bowden cable. Those skilled in the art will appreciate that a Bowden cable (sometimes colloquially referred to as a 'brake cable') is a flexible cable that can transmit a pulling force from one end of the cable to the other. Advantageously, this provides a remote actuation method, such that the actuation unit may be triggered into closing the valve from a remote position which could, by way of example only, be metres away from the valve itself. In other arrangements, the Bowden cable may provide remote actuation from a shorter distance, e.g. from just outside a gas meter box, inside of which the actuation device and valve are located. The Bowden cable may, for example, be coupled to a switch, where the switch may be located in a convenient position for user access. By way of non-limiting example, the valve may be placed in a kitchen cabinet, low to the floor and under a kitchen countertop, while the switch may be located on a wall above the countertop.

The driving member is substantially annular. In some embodiments, the driving member is centred on the axis of the valve. By having the driving member centred with respect to the axis of the valve, the forces exerted by the actuation unit are 'balanced' such that no 'twist' is applied across the valve and/or pipe in which the valve is fitted that may cause damage, i.e. the forces exerted are symmetric. In some potentially overlapping embodiments the driving member is seated inside the torsion spring. For example, where a clock spring is used, the driving member may sit inside the innermost coils of the clock spring.

Those skilled in the art will appreciate that a driving member as described herein may be referred to as "an arbor".

The driving member may, at least in some embodiments, comprise a substantially cylindrical component with a ridged portion arranged to hold the driving member in position when latched.

There are a number of ways of latching the driving member such that it holds the valve in the open position. However, in some embodiments, the actuation unit comprises a housing, wherein the driving member (e.g. its ridged portion) is held in abutment against at least a part of said housing when latched. The housing may have a multi-part construction. In some embodiments, the housing may comprise a body portion and/or a lid portion. The part of the housing against which the driving member is held when latched may, at least in some embodiments, be a lid of the housing. Using the housing to hold the driving member in place may be beneficial where a particularly compact arrangement is required.

In embodiments where a lid portion is provided, the lid portion may partially or wholly enclose a cavity defined by the body portion (i.e. it may be a 'complete' lid in which the cavity is wholly enclosed, or a 'partial' lid in which there is at least one gap between the cavity and the outside world). For example, in embodiments in which a tab is provided that may be pulled in order to release the driving member as described in further detail below), the lid may partially enclose the cavity defined by the body portion, where the tab completely encloses the cavity when latched.

In some such embodiments, the latching mechanism comprises a tab that, when latched, is held in abutment against a stop face. When the external force is applied to the trigger member (e.g. the tab is pulled away from the stop face), the driving member is released and the valve is driven to the closed position. As will be understood by those skilled in the art, a latching mechanism is typically constructed from a 'latch' (a part that moves and can be held) and a 'keeper' (a part that is static and holds the latch). In some such embodiments, the tab and stop face may be the latch and keeper respectively, or *vice versa.*

In a set of embodiments, the stop face is provided on the housing, e.g. on a part of the lid portion.

In a set of potentially overlapping embodiments, the tab is provided on the driving member. However, in some embodiments, the tab is provided on the trigger member, wherein the trigger member mechanically engages the driving member such that both the trigger member and driving member rotate about the axis of the valve together. For example, the tab may be provided on the button housing in one set of embodiments as described herein. Rather than having the trigger member mechanically engage the driving member, arrangements are envisaged in which the trigger member and driving member are of integral construction.

In some embodiments, the latching mechanism is arranged to direct a portion of the external force applied to the trigger member as a rotational force applied to the driving member. For example, where the trigger member comprises a top button, a portion of the longitudinal force applied to the top button in the direction parallel to the axis of the valve may be translated to a rotational force applied to the driving member.

The Applicant has appreciated different mechanisms for providing this translation of a non-rotational force to a rotational force. In some embodiments in which the driving member comprises a tab as outlined above, the tab may comprise a chamfered side surface at an oblique angle to the axis about which the valve rotates, wherein the chamfered side surface of the tab abuts the stop face when the driving member is held by the latching mechanism. In some potentially overlapping embodiments, the stop face of the housing comprises a chamfered side surface at an oblique angle to the axis about which the valve rotates, wherein the chamfered side surface of the stop face abuts the tab when the driving member is held by the latching mechanism. Preferably, the tab and stop face each comprise a chamfered side surface, wherein the chamfered side surface of the tab corresponds to the chamfered side surface of the stop face, i.e. their sloped side surfaces (that touch when latched) match one another. In a potentially overlapping set of embodiments, the tab may comprise a chamfered front surface.

Those skilled in the art will appreciate that the term 'chamfered' as used herein means that the tab and/or stop face may have a wedge-like construction. The Applicant has appreciated that such an arrangement is particularly advantageous because it may make triggering the release of the driving member easier for a user. This effect is achieved because the slope of the tab and/or stop face (and preferably both) translates a component of the lateral force from the torsion spring to a downward force such that, once the trigger member starts to move, the force of the torsion spring 'assists' the trigger members motion. The tab and/or stop face may each have a pair of chamfered side surfaces, such that the movement of one past the other is made easier regardless of whether the rotation about the axis is clockwise or anti-clockwise.

The oblique angle of the slope (the angle between the normal to the surface and the axis around which the valve rotates) will depend on force requirements and an appropriate selection can be made, however in some embodiments, the angle of the slope may be equal to or less than approximately 60°, optionally equal to or less than approximately 40°, and preferably equal to or less than approximately 20°. In a set of embodiments, the angle of the slope is between approximately 1° and 60°, for example between approximately 41° and 60°, preferably between approximately 21 and 40°, and most preferably between approximately 1° and 20°.

In a potentially overlapping set of embodiments the tab and/or stop face may have a curve-like construction in which the tab and/or stop face may each have a pair of curved side surfaces. Thus the tab may, in some embodiments, comprise a curved side surface having a varying angle to the axis about which the valve rotates across said curved surface, wherein the curved side surface of the tab abuts the stop face when the driving member is held by the latching mechanism. In some potentially overlapping embodiments, the stop face of the housing comprises a curved side surface having a varying angle to the axis about which the valve rotates across said curved surface, wherein the curved side surface of the stop face abuts the tab when the driving member is held by the latching mechanism. Preferably, the tab and stop face each comprise a curved side surface, wherein the chamfered side surface of the tab corresponds to the curved side surface of the stop face, i.e. their sloped side surfaces (that touch when latched) match one another. In a potentially overlapping set of embodiments, the tab may comprise a curved front surface.

Those skilled in the art will appreciate that this may provide a screw-thread like construction, where the 'thread pitch' may be relatively coarse. Such an arrangement may advantageously ease turning of the driving member.

The valve may be any of a number of valves which rotate between an open position and a closed position. However, in some embodiments, the valve is a quarter-turn valve. Those skilled in the art will appreciate that a 'quarter-turn' valve is a valve having substantially 90° between its open and closed positions. In some such embodiments, the valve is a ball valve. However, it will be appreciated that the principles of the present invention could also be applied to, for example, disc valves, vane valves, plug valves, etc.

In some embodiments, the valve comprises a gas supply valve, preferably a domestic gas supply valve. The gas supply valve may be positioned in-line on a domestic gas supply pipe. The gas supply valve may, in some embodiments, be a 'standard' gas supply valve, i.e. the valve may be manufactured in accordance with a relevant standard, as determined by an appropriate standards board. Alternatively, the valve may comprise a water supply valve or any other suitable valve for controlling fluid flow (i.e. of a liquid or gas supply).

Those skilled in the art will appreciate that a torsion spring is a type of spring arranged to store mechanical energy by twisting it. When a torsion spring is twisted, it exerts a torque in the rotational direction opposite to the rotational direction of twisting. The resulting torque is generally proportional to the angle through which the spring is twisted. One type of torsion spring that may be used is a helical torsion spring, where a wire or rod is bent into a coil, where a twisting motion applied to its ends (i.e. an applied bending moment) causes the coil to be twisted tighter. However, in some embodiments, the torsion spring comprises a clock spring, sometimes referred to as a 'spiral wound torsion spring' or a 'power spring'. Unlike a helical spring, a clock spring is wound in a concentric spiral (i.e. it has 'in-plane' windings), such that the spring has a relatively 'flat' profile. This may be particularly advantageous in constructing a compact actuation unit suitable for use in physically restricted or 'cramped' conditions.

The actuation unit may, in some embodiments, comprise a sacrificial element arranged to release the driving member such that it is no longer held by the latching mechanism. This may, for example, comprise a component that dissolves in a flood or melts in a fire, allowing automatic triggering of the valve to the closed position without user input. Additionally or alternatively, a component may be arranged to physically break when overpowered with a particular input force, e.g. if the valve is forced closed manually.

Thus, the latching mechanism may hold the driving member at positions other than in the open position, for example at an intermediate position. This may, by way of non-limiting example, be useful for water valves which may be latched at an intermediate position between the 'fully' open and 'fully' closed positions, where a sacrificial element is arranged to release the latching mechanism in response to a flood.

In some arrangements, the driving member is positioned on a fire protection member, said fire protection member having a melting point lower than a melting point of the driving member, wherein the fire protection member is arranged such that, when the driving member when latched, the fire protection member releases the driving member upon the fire protection member melting. The fire protection member may, for example, be a washer such as a plastic washer. Alternatively, where the triggering member comprises a pull tab, a portion of the pull tab may be arranged to melt when exposed to a sufficiently high temperature, thereby releasing the driving member.

The sacrificial element may be arranged to break when exposed to a fire, e.g. when exposed to a temperature exceeding some threshold limit. Such a sacrificial element may be frangible. In a set of such embodiments of either of the foregoing aspects of the invention, the sacrificial element comprises a glass bulb. The temperature threshold of the bulb may, for example, depend on the geometry of the bulb and/or a fluid composition within the bulb (e.g. a liquid and/or gas inside the bulb that expands when exposed to sufficient heat energy). The Applicant has appreciated that it is advantageous to use a frangible glass bulb (similar to frangible glass bulbs used in fire sprinkler systems) in order to provide a heat-activated valve, e.g. to close a gas supply valve in the event of a fire.

In normal operation, the latching mechanism may be held in abutment against the glass bulb, wherein breaking of the bulb causes the latching mechanism to be released. Such an arrangement may advantageously bias the valve to the closed position in response to exposure to a fire.

In a set of such embodiments, the latching mechanism may comprise a bulb retainer that, in normal operation, is held in abutment between the glass bulb and the driving member. In other words, the bulb retainer may resist the spring force of the driving member so long as the glass bulb remains intact.

Once assembled, one side of the bulb is held in contact with the bulb retainer. The opposite side of the bulb may be held in place by a bulb holding portion, which may for example be a suitable slot (e.g. a milled slot) located on the lid of the housing. The bulb retainer may, in some embodiments, comprise a pivot arm arranged to pivot around a pivot axis when the glass bulb breaks. This pivot arm may therefore be held against the spring force of the driving member, where the driving member can push the pivot arm out of the way upon the glass bulb breaking.

The pivot axis may extend parallel to the axis of the valve, i.e. such that the plane in which the pivot arm rotates is parallel to the plane in which the valve rotates.

While the trigger mechanism could be the only way by which the valve can be closed, in a set of embodiments, the valve assembly is arranged that an external third torque in the first rotational direction closes the valve. There may, in some such embodiments, be a threshold amount of force required to 'overcome' the resistance of the driving member when latched before the valve can be forced closed. This may be advantageous where a person (e.g. a firefighter) may need to manually close the valve. As outlined above, the actuation unit may comprise a sacrificial element that breaks when a user applies an external torque in the first rotational direction greater than a threshold to the valve assembly, e.g. to overpower the force of the torsion spring and close the valve manually.

It will be appreciated that the device described herein works regardless of whether closing the valve requires a clockwise rotation or an anti-clockwise rotation, i.e. the first rotational direction may be clockwise and the second rotational direction may be anti-clockwise, or *vice versa.* In some embodiments, the torsion spring is invertible, such that the respective directions of the first and second rotational directions may be swapped. For example, where a clock spring is used, the clock spring may, in such embodiments, be flipped over. In some embodiments, the torsion spring is sealed within a housing, and so the determination of the directions is made during manufacturing, however other arrangements are envisaged in which the torsion spring may be placed in the desired orientation during installation so as to fit a particular end-use.

In some embodiments, the operating member of the valve comprises a stem that extends along the axis of the valve. Such a stem may, for example, be threaded. Additionally or alternatively, the operating member of the valve may comprise a handle, e.g. extending laterally from the stem. The driving member may be physically attached to the operating member, for example attached to the stem or the handle of the valve.

In some embodiments, the valve assembly comprises a visual indicator that indicates when the valve is in the open position and when the valve is in the closed position. This can be helpful to allow a user to easily see at a glance the current operating state of the valve.

For example, in embodiments where the operating member of the valve comprises a handle, the handle may aid identification of the operating state of the valve. In some embodiments, a first visual marker indicates the open position and a second visual marker indicates the closed position, wherein in the open position, the handle covers the second visual marker, and wherein in the closed position, the handle covers the first visual marker. In some such embodiments, the handle is elongate, wherein a portion of the elongate handle obscures the first and second visual markers in the appropriate positions. It will be appreciated that visual markers include any suitable verbal or symbolic visual markers including: the words 'ON' and 'OFF'; the words 'OPEN' and 'CLOSED'; the numbers '1' and '0'; symbols such as a tick and a cross; illustrative symbols showing a valve being open or closed; illustrative symbols showing fluid flow and no fluid flow; colour coding; arrows; etc.

In some embodiments, the actuation unit comprises an engagement portion arranged to engage with a pipe. This engagement portion acts as a 'strap' such that, where the valve is connected in-line with a pipe, the actuation unit can be fixed around the valve and affixed to the pipe. The engagement portion could comprise a removable piece that is positioned on the opposite side of the pipe to the rest of the actuation unit, where these are then fixed together by a suitable fastening means, e.g. screws or a nut and bolt arrangement. The removable piece and the actuation unit (e.g. a housing of the actuation unit) may be supplied with through-holes that align when the removable piece is in place, where a suitable fastener may hold this in place.

The removable piece may be 'U-shaped' (i.e. of a horseshoe-like construction) that forms a collar around the pipe when affixed.

In a set of such embodiments, the engagement portion may comprise a hinged portion. Providing a hinged mechanism may advantageously allow the actuation unit to be easily clamped around the valve and affixed to the pipe and for easy removal of the actuation unit from the pipe. The actuation unit may have a 'double hinge', where the hinge can open on two opposite sides of the actuation unit so as to allow placement around pipes in different spaces. Arrangements are envisaged in which a removable piece with through holes may be fixed to the housing of the actuator through one of the sets of through-holes thereby forming the hinge, however in other arrangements a dedicated hinge may be provided.

The torsion spring may come 'pre-loaded' in the valve assembly such that the valve assembly is assembled onto a valve when the valve is in the closed position. Once assembled, the valve is then moved to the open position (e.g. with a manual 90° turn to the open position).

In some embodiments, a safety cover may be provided that contains the rest of the valve assembly, wherein the trigger member may be accessed through the safety cover (e.g. a button may protrude through the safety cover). The safety cover may, in a set of embodiments, comprise a transparent window through which the handle of the valve may be seen, thereby providing a visual indication of whether or not the valve is closed. The safety cover may be locked closed around the valve assembly, preventing the valve from being re-opened after it is triggered without the key to the safety cover. Such a key may, for example, only be held by authorised persons such as gas engineers or firefighters.

### Brief Description of the Drawings

Certain embodiments of the present invention will now be described with reference to the accompanying drawings, in which:
Figs. 1A and 1B are schematic drawings of a quarter-turn valve;
Figs. 2A and 2B are cross-sectional drawings of the valve of Figs. 1A and 1B;
Figs. 3A and 3B are schematic drawings that show an actuation unit with a top button in accordance with an embodiment of the present invention including the handle used to operate the valve;
Fig. 4 is an exploded view of the actuation unit in accordance with an embodiment of the present invention;
Fig. 5 is a further exploded view of the actuation unit of Fig. 4;
Fig. 6 is a cross-sectional view of the actuation unit of Fig. 4 that shows the torsion spring;
Figs. 7A and 7B are schematic drawings that illustrate operation of the button used to trigger the actuation unit of Fig. 4;
Fig. 8 is a cross-sectional drawing that shows a mechanism that allows for the valve to be closed manually;
Figs. 9A-E are schematic drawings illustrating operation of the actuation unit of Fig. 4;
Figs. 10A-D are further schematic drawings illustrating operation of the actuation unit;
Fig. 11 is a cross-sectional drawing that shows how the torsion spring drives the arbor;
Fig. 12 is a cross-sectional drawing showing a fire protection mechanism within the actuation unit;
Figs. 13A-C are schematic drawings illustrating operation of sacrificial fire protection mechanisms;
Figs. 14A and 14B are schematic diagrams showing an alternative sacrificial triggering mechanism;
Figs. 15A-C are schematic drawings that show an actuation unit with a side button in accordance with a further embodiment of the present invention;
Figs. 16A-C are further schematic drawings illustrating operation of the actuation unit of Figs. 15A-C;
Fig. 17 is a schematic drawing that shows an actuation unit with a pull-tab trigger mechanism in accordance with a further embodiment of the present invention;
Figs. 18A-D are schematic drawings that show an actuation unit with a Bowden cable trigger mechanism in accordance with an embodiment of the present invention;
Figs. 19A and 19B are cross-sectional drawings showing a remote terminal for use with the actuation unit of Figs. 18A-D;
Figs. 20A-C are cross-sectional drawings that show an alternative mechanism that allows for the valve to be closed manually;
Figs. 21A-C are schematic drawings of an actuation unit with a sacrificial triggering mechanism that uses a frangible glass bulb in accordance with a further embodiment of the present invention; and
Figs. 22A-B are further schematic drawings illustrating the operation of the sacrificial glass bulb triggering mechanism of Figs. 21A-C.

### Detailed Description

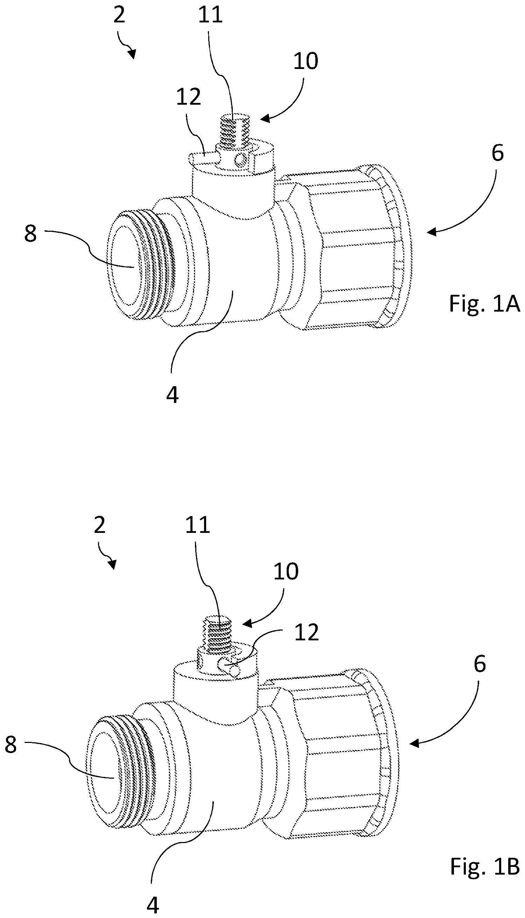

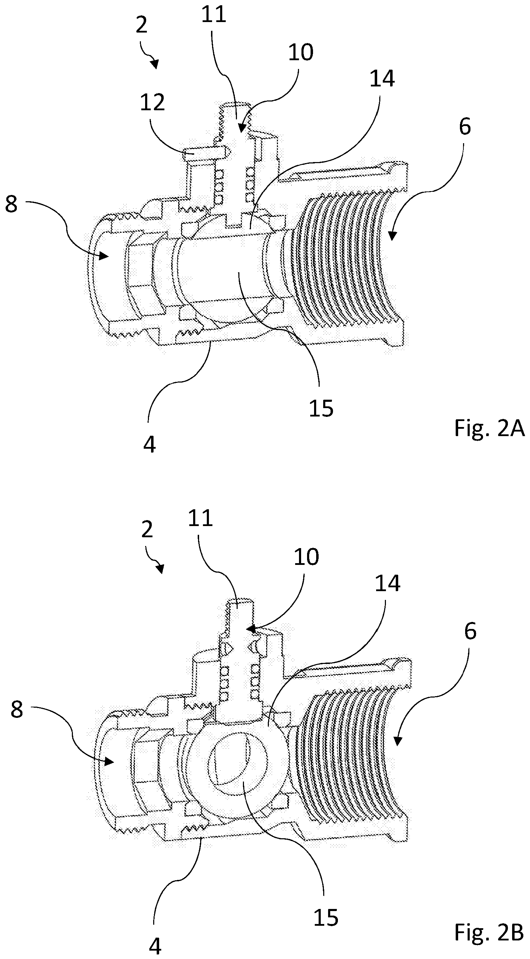

Figs. 1A and 1B are schematic drawings of a quarter-turn valve 2, while Figs. 2A and 2B are cross-sectional drawings of the valve 2 of Figs. 1A and 1B. In particular, the valve 2 shown is a quarter-turn ball valve, as outlined in further detail below.

The valve 2 comprises a valve housing 4, with two fluid apertures 6, 8 which allow ingress of a fluid, i.e. a liquid or a gas, into the valve 2. An operating member 10 is arranged to rotate a quarter turn between an 'on' position (as shown in Figs. 1A and 2A) in which fluid may flow freely through the valve 2, and an 'off' position (as shown in Figs. 1B and 2B) in which the fluid is prevented from flowing through the valve 2. Typically, a handle (not shown) is attached to a stem 11, which may be threaded, such that rotation of the handle rotates the stem 11 about an axis, thereby rotating a ball 14 within the valve housing 4 about the axis of the stem 11.

The ball 14 has a hollow cylinder 15 running through it, such that in the on position, the flow axis of the hollow cylinder 15 is aligned with the axis of the valve 2 such that fluid may pass through the valve 2. In the off position, however, the flow axis of the hollow cylinder 15 is perpendicular to the flow axis of the valve 2, such that there is no fluid flow path, thereby preventing flow of the fluid.

It will be appreciated that intermediate positions between the on and off positions may reduce but not completely inhibit fluid flow, however generally an emergency valve such as an emergency domestic gas shut off valve is either 'on' or 'off', with intermediate positions being undesirable for safety reasons well understood by those skilled in the art.

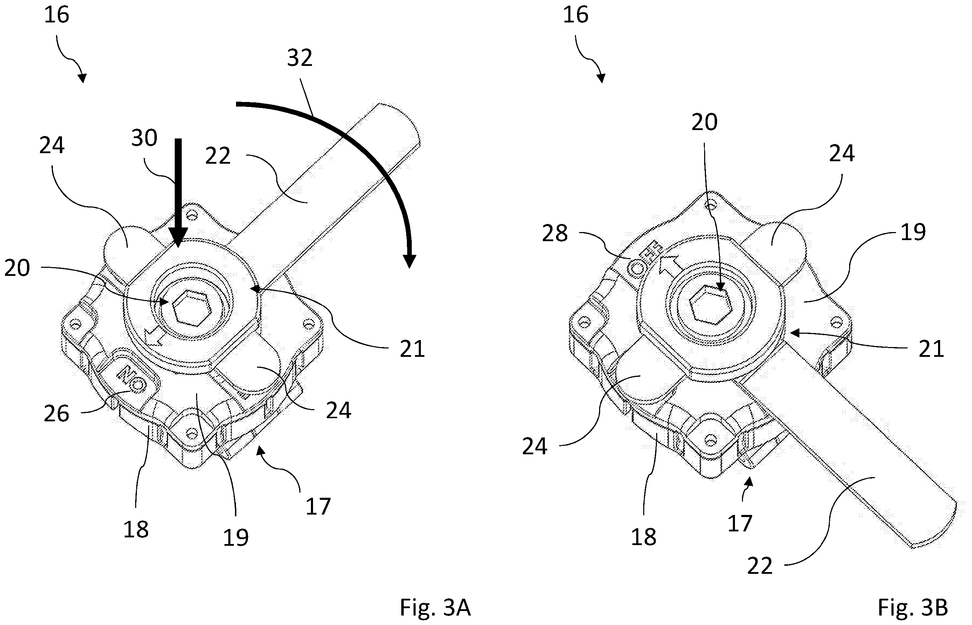

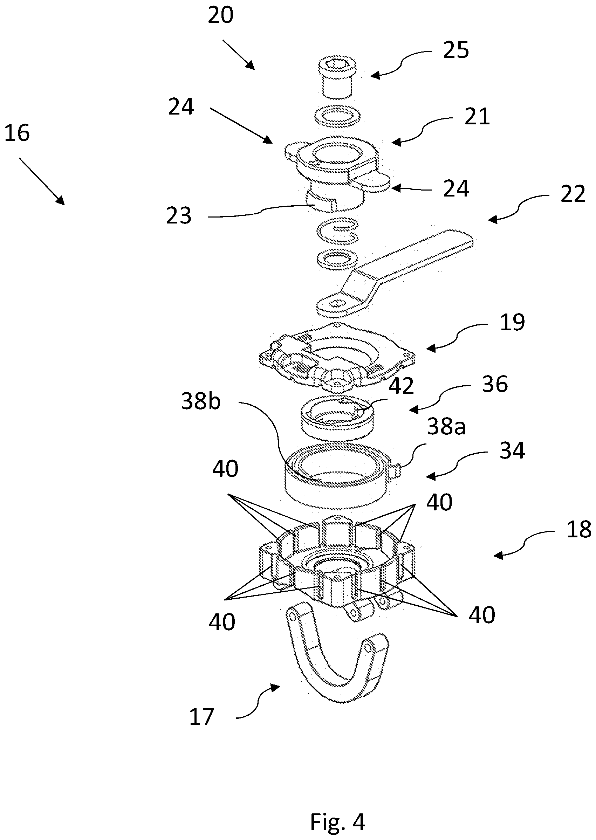

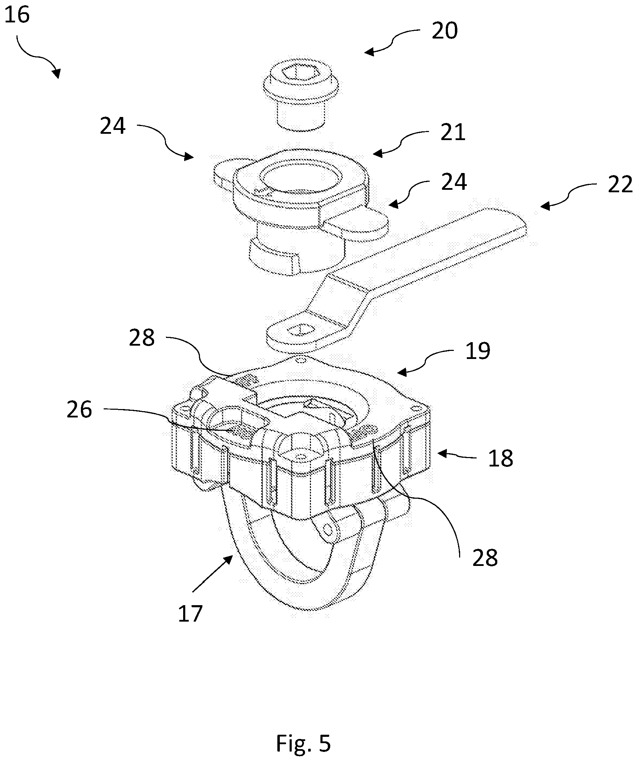

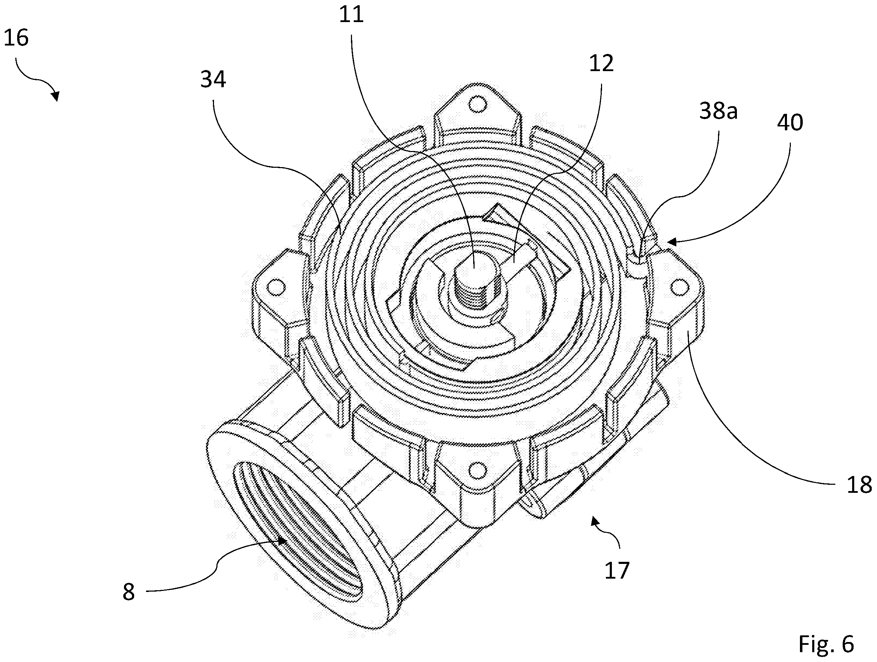

Figs. 3A and 3B are schematic drawings that show an actuation unit 16 with a top button 20 in accordance with an embodiment of the present invention including the handle used to operate the valve 2. The internal construction of the actuation unit 16 may be readily understood with reference to Figs. 4 to 6. Briefly, Figs. 4 and 5 provide exploded views of the actuation unit 16, and Fig. 6 is a cross-sectional view of the actuation unit 16.

The actuation unit 16 is constructed from a housing 18 fitted a lid 19, a top button 20 (i.e. a trigger member) including a button inner 25 which is positioned within, and is movable vertically relative to, a button housing 21. The button housing 21 is also moveable vertically relative to the housing 18, as explained in further detail below.

A hinged portion 17 is positioned at the bottom of the actuation unit 16, and 'hinges' away from the housing 18. This hinged portion 17 acts as a 'strap' such that, where the valve 2 is connected in-line with a pipe (not shown), the hinged portion 17 allows the actuation unit 16 to be clamped around the valve 2 and affixed to the pipe. This hinged portion 17 may be 'double hinged', such that the strap may open in either direction, as different installations may require that the strap open one direction or the other in order to fit it around the pipe. It will of course be appreciated that other arrangements are possible, e.g. the hinged portion 17 could instead be a wholly separate piece that is screwed or bolted to the housing 18 once the actuation unit 16 is in place.

The handle 22 may be supplied as part of the actuation unit 16 or may be an existing handle associated with the valve 2 which is removed when the actuation unit 16 is fitted, and then re-attached once the actuation unit 16 is in place. A tab-shaped protrusion 23 extends from an outer surface of the button housing 21 and is arranged to latch against the housing 18 of the actuation unit 16, as outlined in further detail below.

The button housing 21 engages with the operating member 10 of the valve 2, specifically with the stem 11, via an arbor 36 as outlined in further detail below. It will be appreciated that in other embodiments, the button housing 21 may additionally or alternatively engage with the handle 22 (again, via the arbor 36 outlined below) which, in turn, engages the stem 11.

Two side tabs 24 extend from the button housing 21, though these could form part of the handle 22 in some embodiments, e.g. the handle 22 and side tabs 24 could be of integral construction. An 'on' indicator 26 and an 'off' indicator 28 are located on the upper face of the lid 19. Depending on whether the valve 2 is in the open or closed position, only one of these indicators 26, 28 is visible at a time, the other indicator 26, 28 being covered by the side tabs 24. This allows a user to easily see at a glance the current operating state of the valve 2, i.e. whether it is open or closed. In the illustrated embodiment, the 'on' indicator 26 and an 'off' indicator 28 are the words 'ON' and 'OFF' respectively, however it will be appreciated that these indicators may be any other form of verbal or symbolic indicator, for example colours, symbols, pictograms, words, letters, ticks/crosses, etc. as appropriate.

As will be explained in further detail below, pushing the button 20 in the downward direction 30 (i.e. vertically relative to the button housing 21) releases a driving member from a latch, causing the driving member to force the valve 2 from the open position (see Figs. 1A, 2A, and 3A) to the closed position (see Figs. 1B, 2B, and 3B), by rotating the operating member 10 of the valve 2 around its axis, i.e. in a rotational direction 32. The mechanism that achieves this may be readily understood by reference to Figs. 4, 5, and 6.

Within the housing 18 is located a torsion spring 34 and an arbor 36 (i.e. a driving member). The torsion spring 34 has a tab 38a, 38b at each end of the spring 34. The outermost tab 38a is, when assembled, held in place in a slot 40 of the housing 18. The housing 18 may be provided with a number of these slots 40, such that the 'built in' torsion of the torsion spring 34 (i.e. a 'torsional pre-load force') may be adjusted by placing the tab 38a in a particular slot 40. The innermost tab 38b is, when assembled, held in place in a slot 42 of the arbor 36. Thus, rotating the arbor 36 relative to the housing 18 varies the torsion of the torsion spring 34, storing energy within the spring 34.

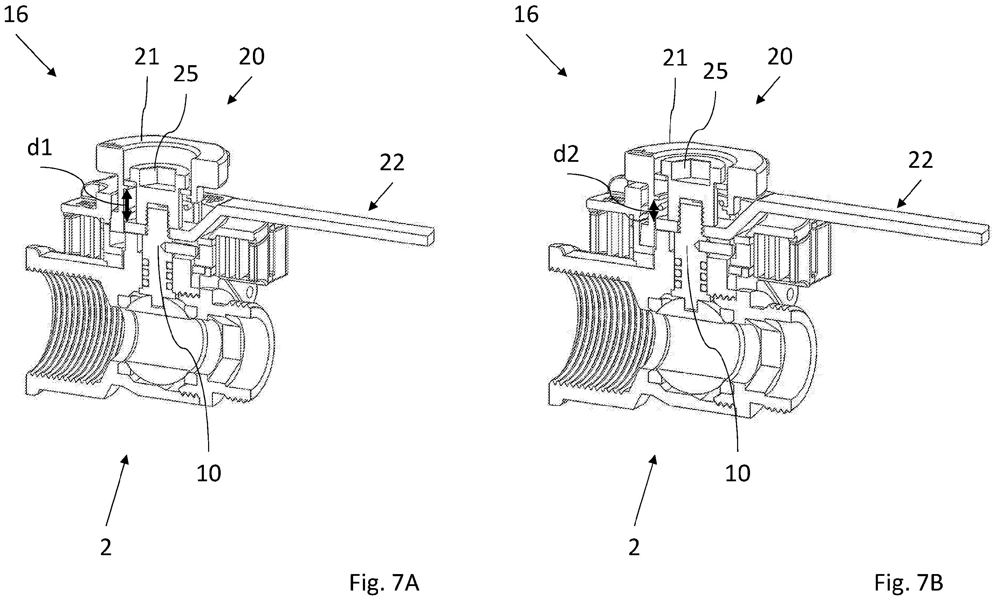

When the valve 2 is in the closed position, a user must apply a sufficient external torque in order to reset the valve 2 to the open position. In order to achieve this, the user applies a force to the handle 22, which is coupled to the arbor 36, which in turn is coupled to the operating member 10 of the valve 2. As the arbor 36 is rotated relative to the housing 18 in response to an external torque applied to the handle 22, the operating member 10 of the valve 2 rotates from the closed position to the open position as shown in Fig. 7A. Once in the open position, the button inner 25 is free to 'pop up' as shown in Fig. 7B, changing the distance between the top surface of the button inner 25 and the button housing 21 from d1 to d2, causing an audible 'click' that the user can hear.

Once the open position is reached, the arbor 36 is held in place by the housing 18. Thus the arbor 36 is 'latched' by the housing 18 until the button 20 is pressed.

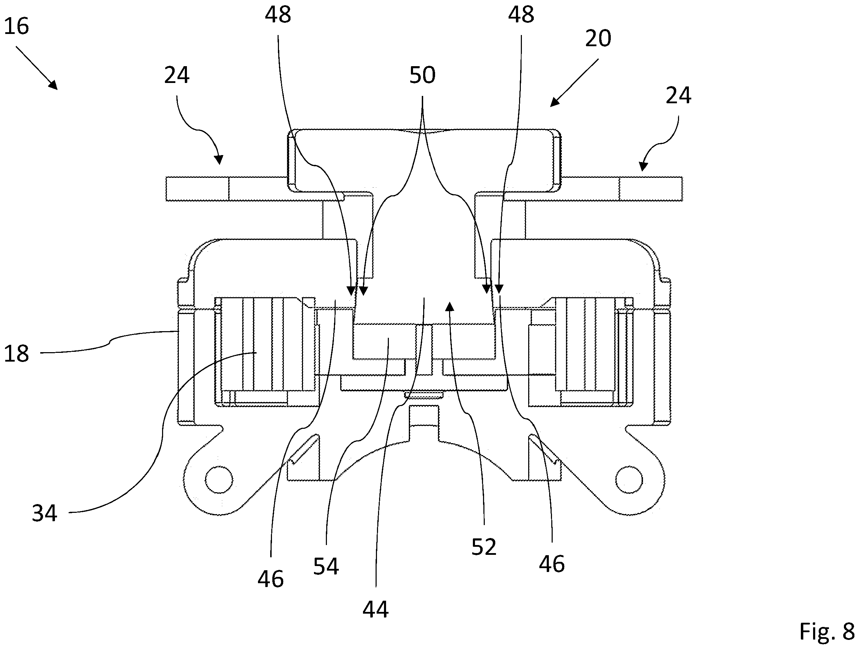

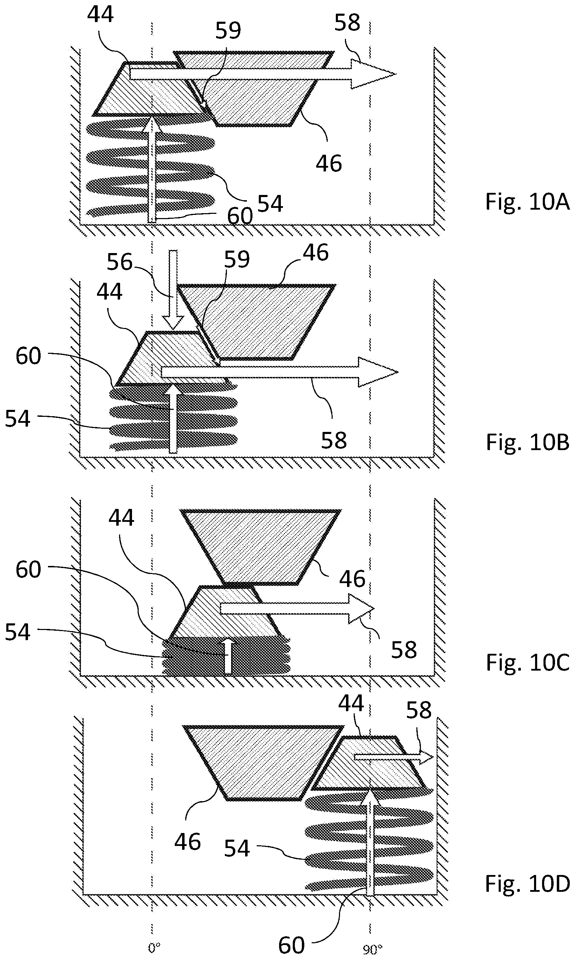

As can be seen in Fig. 8, the button 20 has a tapered triggering tab 44 that, when the valve 2 is in the open position, abuts a tapered stop face 46 on the main body assembly. In this example, the tapered stop face 46 is on the lid portion 19. This operation may be understood with further reference to Figs. 10A-D as outlined in further detail below.

The tab 44 has a pair of chamfered side surfaces 48 which are each at an oblique angle to the axis about which the valve 2 rotates. The chamfered side surfaces 48 of the tab 44 abut corresponding chamfered side surfaces 50 of the stop face 46 when the arbor 36 is held by the latching mechanism. The tab also comprises a chamfered front surface 52. The chamfered side surfaces 48 of the tab 44 and the chamfered side surfaces 50 of the stop face 46 correspond to one another such that their sloped side surfaces 48, 50 substantially match one another.

This means a portion of the torque 58 from the torsion spring 34 creates a downward force component on the button 20 to compensate for friction, making depressing the button 20 easier than it would be without the taper. The button 20 is supported by a trigger spring 54. By adjusting the trigger spring force, the force required to depress the button 20 can be adjusted.

Additionally, the taper can be chosen so that the valve 2 can be closed with the lever arm, without using the button. This will require high torque but may prevent damage to the valve if the handle 22 is forced while ultimately allowing the valve 2 to be closed.

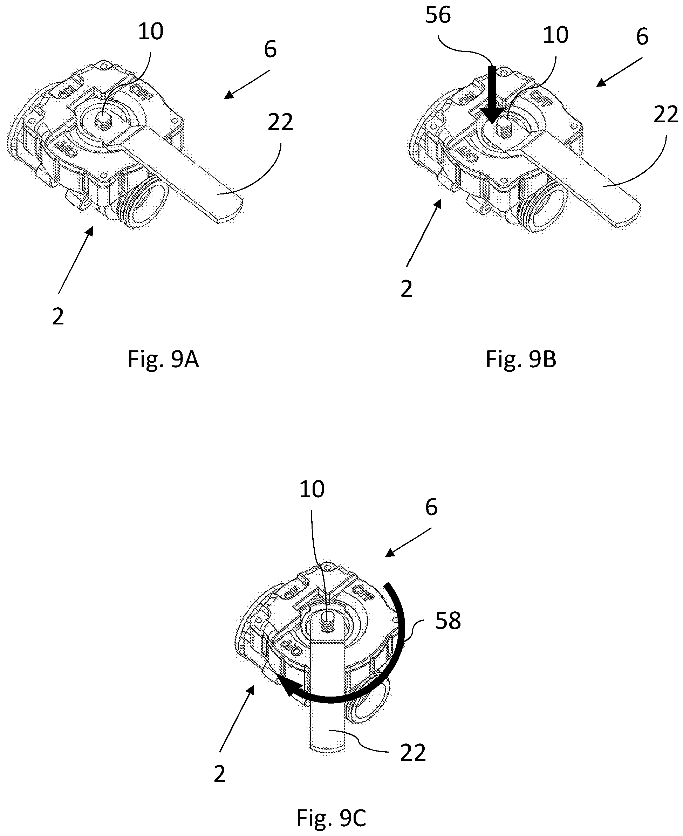

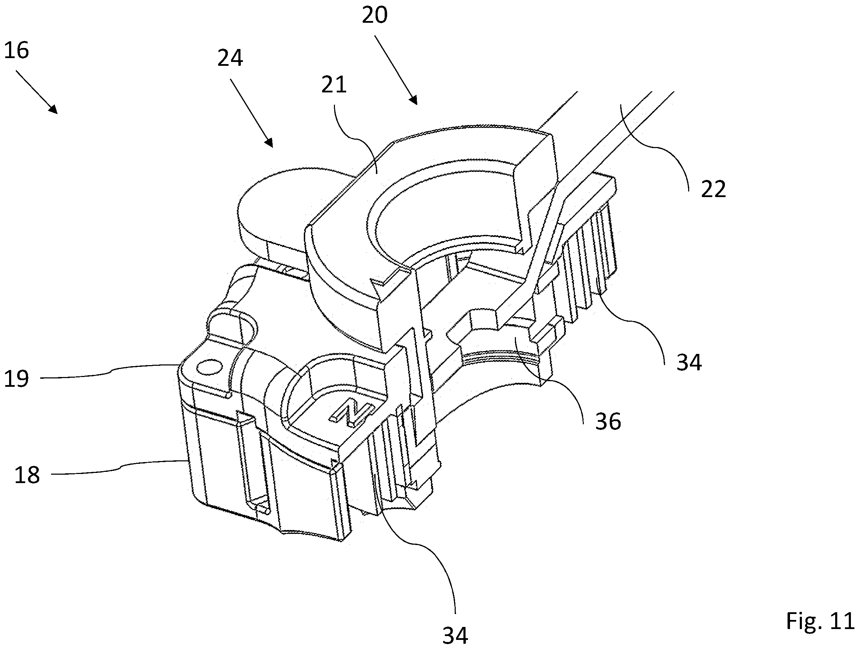

An overview of operation when the button 20 is pressed can be seen in Figs. 9A-E, with further reference to Figs. 10A-D. For reference, a cross-section of the actuation unit 16 is shown in Fig. 11.

Fig. 9A shows the actuation unit 16 when the valve 2 is in the open position, without the button assembly visible for ease of understanding. In this position, the valve 2 is held in the open position, because the arbor 36 is latched as outlined above. As can be seen in Fig. 10A, in the open position, the rotational force 58 of the torsion spring 34 cannot close the valve because of the latching mechanism, i.e. the tab 44 on the button housing 21 is held in abutment against the stop face 46. The tab 44 is biased upwards by the trigger spring 54.

The user then presses down the button 20 by applying an 'axial' force 56, i.e. along the axis of the operating member 10 of the valve 2, as shown in Fig. 9B, compressing the trigger spring 54. As can be seen in Fig. 10B, this moves the tab 44 downwards relative to the stop face 46. Due to the chamfered side surfaces 48, 50 of the tab 44 and stop face 46, a component 59 of the rotational force 58 provided by the torsion spring assists with the downward motion of the tab 44.

This allows the tab 44 on the button housing 21 to pass under the stop face 46 of the housing 18, releasing the arbor 36 from the latching mechanism and permitting the torsion spring 34 to impart a rotational force 58 on the arbor 36, as shown in Fig. 9C.

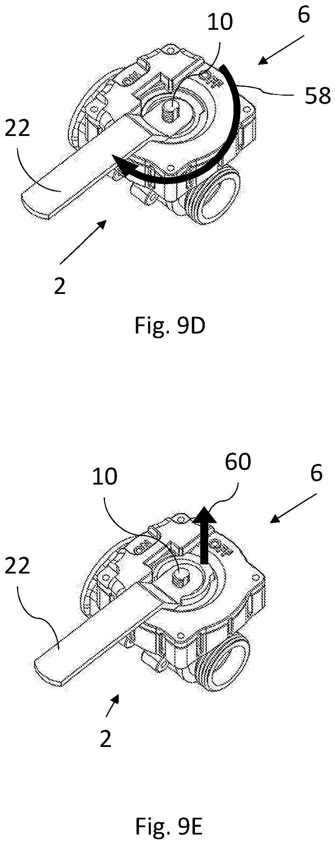

Once the tab 44 has moved sufficiently downwards relative to the stop face 46 as shown in Fig. 9C, the tab 44 passes under the stop face 46 as shown in Fig. 10C. The rotational force 58 is then free to bias the valve 2 to the closed position, as shown in Fig. 9D.

Once in the closed position, the trigger spring 54 imparts an upward axial force 60, which pops the button 20 up as shown in Fig. 9E and Fig. 10D, and the tab 44 moves upward relative to the stop face 46, on the other side of the stop face 46 having gone through a rotation of 90°. The button 20 moving upwards may make an audible click which may indicate to the user that the valve is closed. This click may be sufficiently loud that it may be heard over a telephone, e.g. by a telephone operator talking the user through shutting off the gas supply.

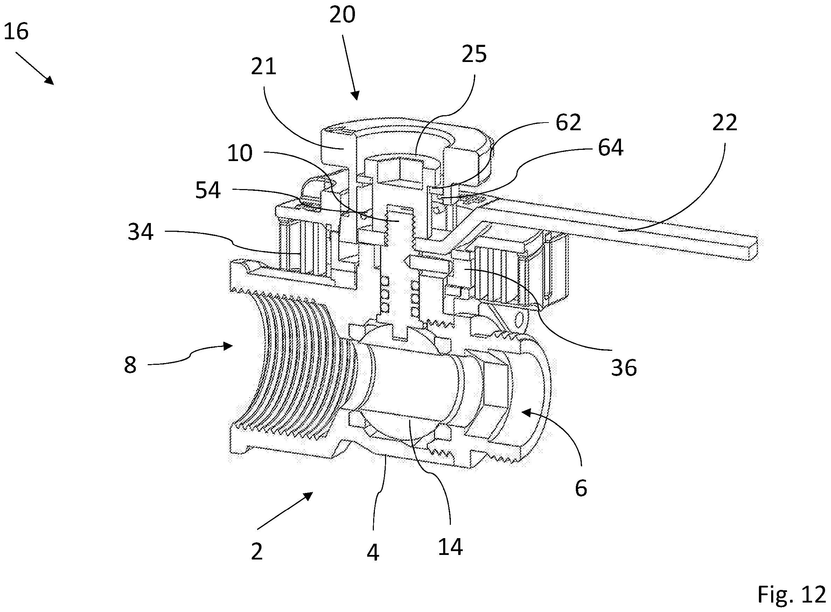

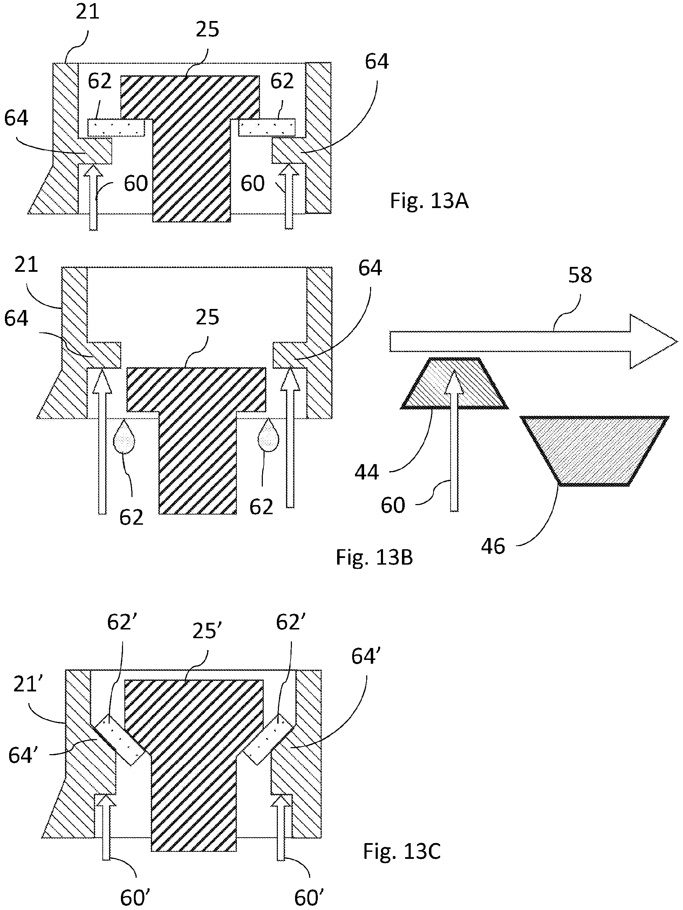

Fig. 12 is a cross-sectional drawing showing a fire protection mechanism within the actuation unit 16. Figs. 13A-C are schematic drawings illustrating operation of fire protection mechanisms. Specifically, Figs. 13A and 13B illustrate operation of the protection mechanism of Fig. 12, while Fig. 13C shows an alternative construction.

In this embodiment, a thermal washer 62 having a selected melting temperature is provided between the button inner 25 and a lip 64 of the button housing 21 on which the button inner 25 rests, as can be seen in Fig. 13A.

This thermal washer 62 acts as fuse by failing at a specific high temperature, i.e. its melting point, such that it melts. When the thermal washer 62 melts as shown in Fig. 13B, this allows the button 20 to move upwards in response to the force 60 from the trigger spring 54, allowing the button 20 to pass over the button inner 25, forced upwards by the trigger spring 54. Once the button 20 has moved upwards, the arbor 36 is free to rotate and is forced by the torsion spring 34 to close the emergency control valve 2.

Fig. 13C shows an alternative construction in which like reference numerals appended with a prime symbol (') denote like components. As can be seen in Fig. 13C, the thermal washer 62' may be placed at an angle, rather than flat, with a suitable slope of the lip 64' of the button housing 21'. This sloping of the thermal washer 62' may advantageously help to prevent the button 20 getting caught in case of less-than-optimal concentricity or uneven loading.

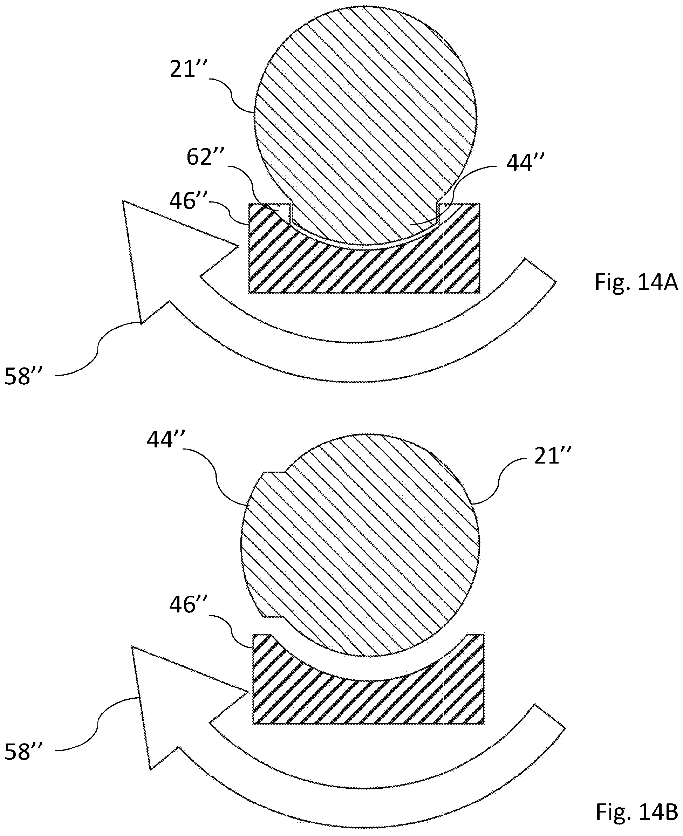

Figs. 14A and 14B are schematic diagrams showing an alternative sacrificial triggering mechanism in which like reference numerals appended with a double prime symbol (") denote like components. In this arrangement, the tab 44" of the button housing 21" is held in place by a fixed stop feature 46", which prevents the rotation of the button housing 21" and associated arbor (not shown) under the rotational force 58" of the torsion spring (not shown).

The stop feature 46" has a sacrificial part 62" which melts when exposed to a sufficiently high temperature, such that it no longer holds the tab 44" of the button housing 21", thereby allowing rotation of the button housing 21" and associated arbor (not shown) under the influence of the torsion spring (not shown), i.e. in response to the rotational force 58".

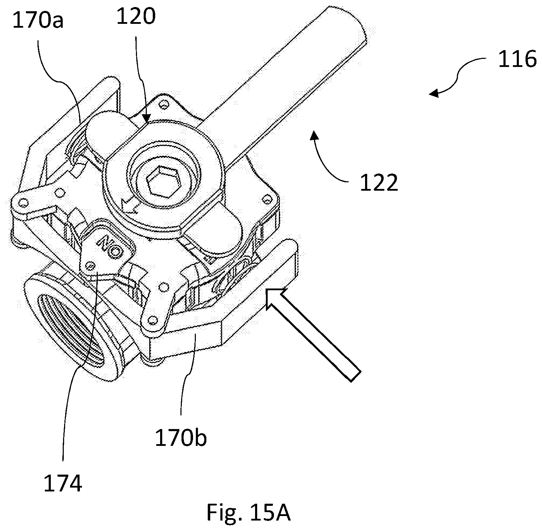

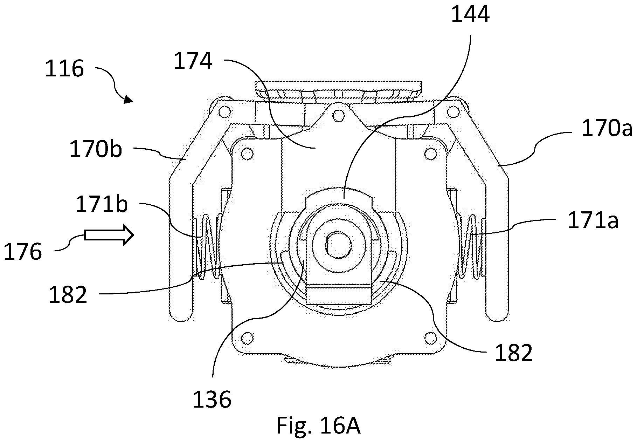

Figs. 15A-C are schematic drawings that show an alternative actuation unit 116 with a side button 120 in accordance with a further embodiment of the present invention. Figs. 16A-C are further schematic drawings illustrating operation of the actuation unit 116 of Figs. 15A-C.

In addition to the top button 120, which operates in the same way as described above, the actuation unit 116 is provided with a pair of side buttons 170a, 170b arranged to trigger release of the arbor 136 in response to a lateral force 176 applied by the user, i.e. in response to one or both of the side buttons 170a, 170b being pushed or squeezed against the restorative force from corresponding side button springs 171a, 171ab.

In the actuation unit 116, a bypass plate 174 is provided which, if moved, releases the latching mechanism such that the arbor 136 and top button assembly 120 (together with the associated handle 122) to rotate around the axis of the valve, driving the valve to the closed position.

In Figs. 15A and 16A, the valve is in the open position, and the bypass plate 174 holds the arbor 136 in place. However, when the user presses either side button 170a, 170b by applying a lateral force 176, this causes the bypass plate to move in a radial direction 178 away from the arbor 136, releasing the tab 144 of the button housing 121.

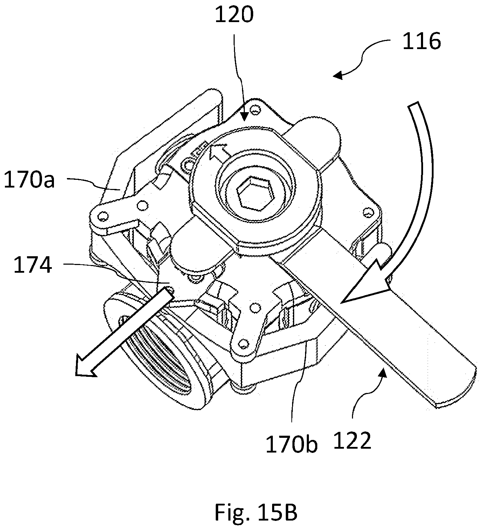

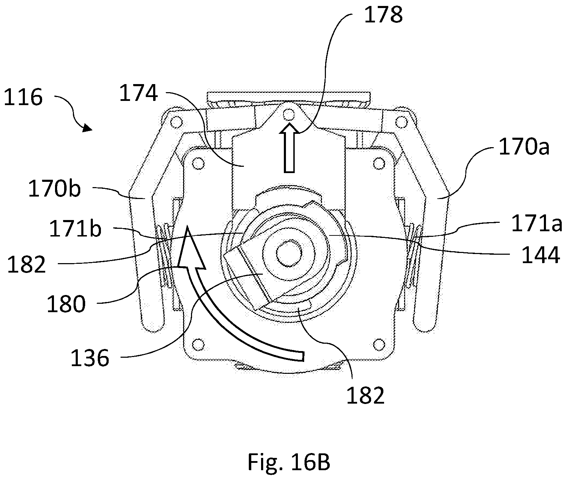

This can be seen in Figs. 15B and 16B, in which the bypass plate 174 moves backwards, allowing the tab 144 on the button housing to pass and thus the arbor 136, button housing 121, and handle 122 to rotate about the axis of the operating member of the valve in a rotational direction 180 about the axis of the valve's operating member.

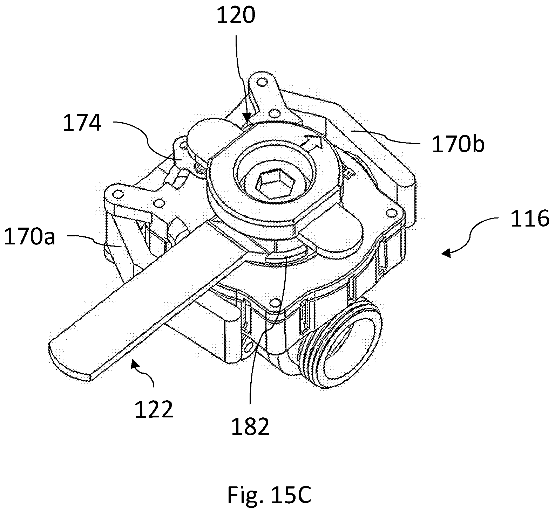

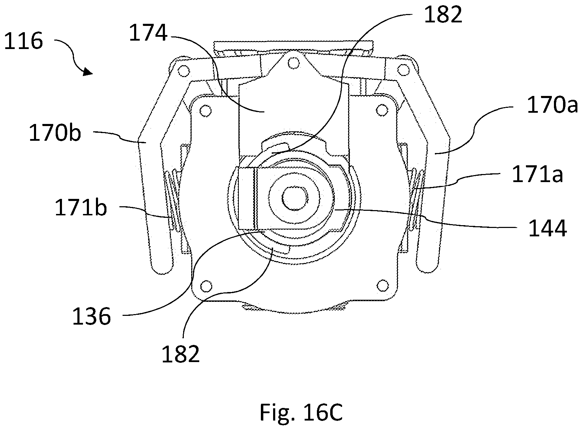

Once the valve is in the closed position as shown in Figs. 15C and 16C, an extruded boss 182 on the arbor 136 prevents the bypass plate 174 from returning to its forward position.

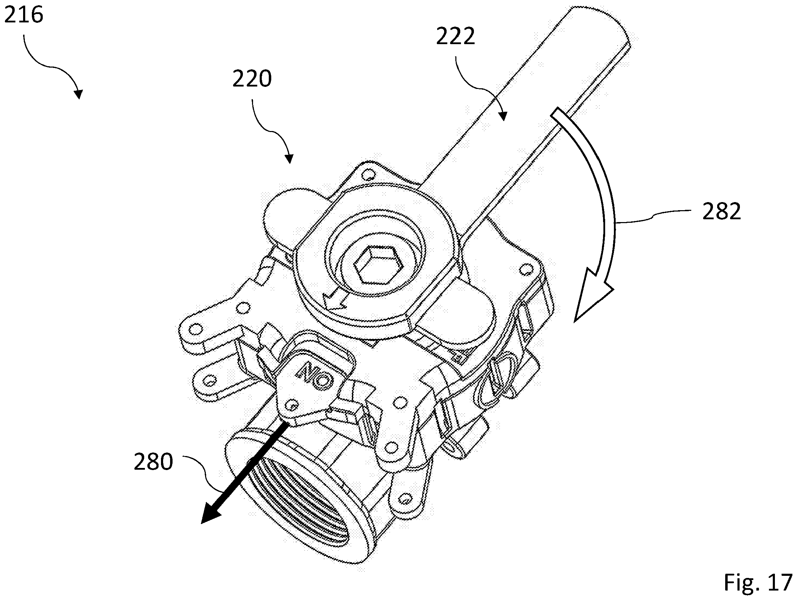

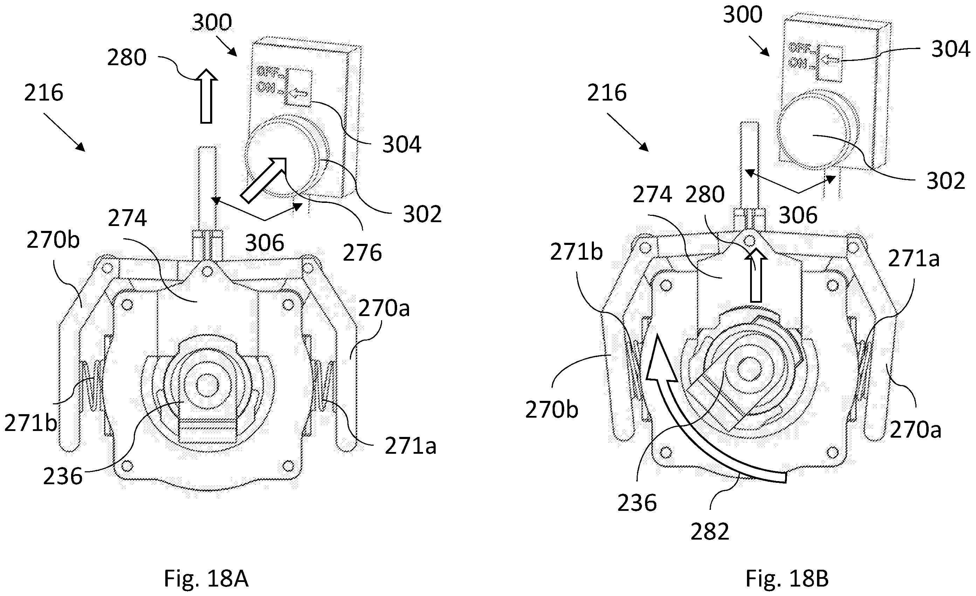

Fig. 17 is a schematic drawing that shows an actuation unit 216 with a pull-tab trigger mechanism in accordance with a further embodiment of the present invention. Figs. 18A-D are schematic drawings that show this actuation unit 216 connected to a Bowden cable trigger mechanism.

Similarly to the actuation unit 116 described previously with reference to Figs. 15A-C and 16A-C, a bypass plate 274 provides a latching mechanism by which the arbor 236 is held in place. The actuation unit 216 has a top button 220 trigger and handle 222 which operate in the same way described with reference to the actuation unit 16 of Figs. 3 to 6. Similarly, the actuation unit 216 also has side buttons 270a, 270b that can move the bypass plate 274 backwards in the manner described previous with reference to the actuation unit 116 of Figs. 15A-C and 16A-C.

In this arrangement there is a remote terminal 300 with a button 302 and an indicator 304. The button 302 can be used to trigger release of the latching mechanism, thereby closing the valve, as explained below. The indicator 304 provides a visual indication of whether the gas is on or off (i.e. whether the valve is open or closed respectively).

As can be seen in Fig. 18A, initially the gas is on as indicated by the indicator 304. When a user presses the external button 302 by applying a force 276, the inner core of a Bowden cable 306, attached to the button 302, is pulled, i.e. it applies a lateral force 280 to the bypass plate 274. The other end of the inner core of the Bowden cable 306 is connected to the bypass plate 274, which acts as a pull tab.

As shown in Fig. 18B, the bypass plate 274 therefore moves backwards, away from the arbor 236, allowing button tab to pass and thus the arbor 236 to rotate in the rotational direction 282, therefore driving the operating member of the valve toward the closed position. During this motion, the arrow on the indicator 304 indicates that the valve is not fully closed.

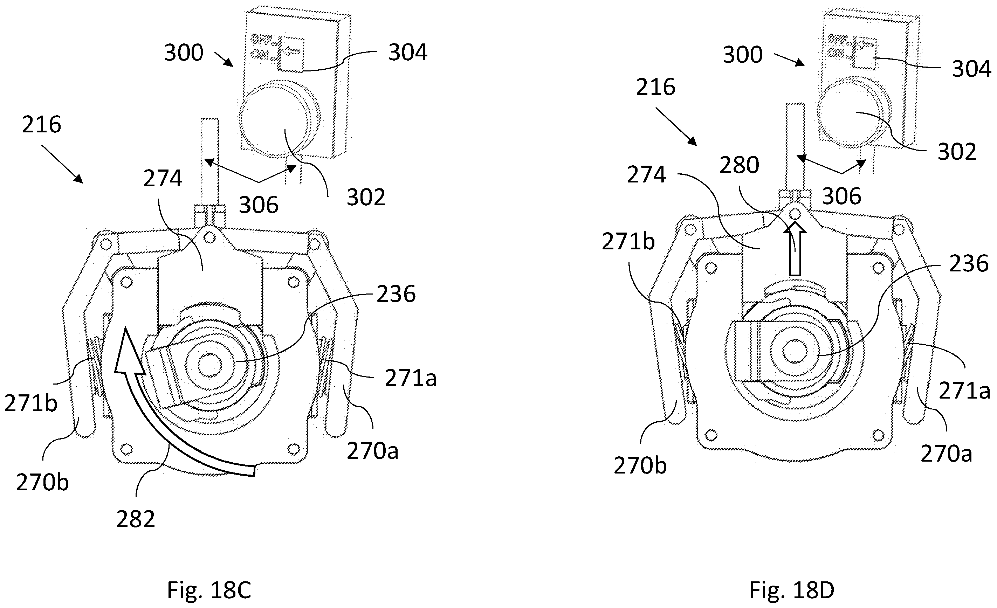

As can be seen in Fig. 18C, and similarly to the corresponding feature described with respect to the actuation unit 116 of Figs. 15A-C and 16A-C, an extruded boss on the arbor 236 prevents the bypass plate 274 from returning to its forward position. The arrow on the indicator 304 indicates that the valve is still not fully closed.

The extruded boss on the arbor 236 is stepped towards the end of its travel which allows for further movement of the bypass plate 274. This allows more accurate indication at the remote terminal 300 that the valve is fully closed, as shown in Fig. 18D.

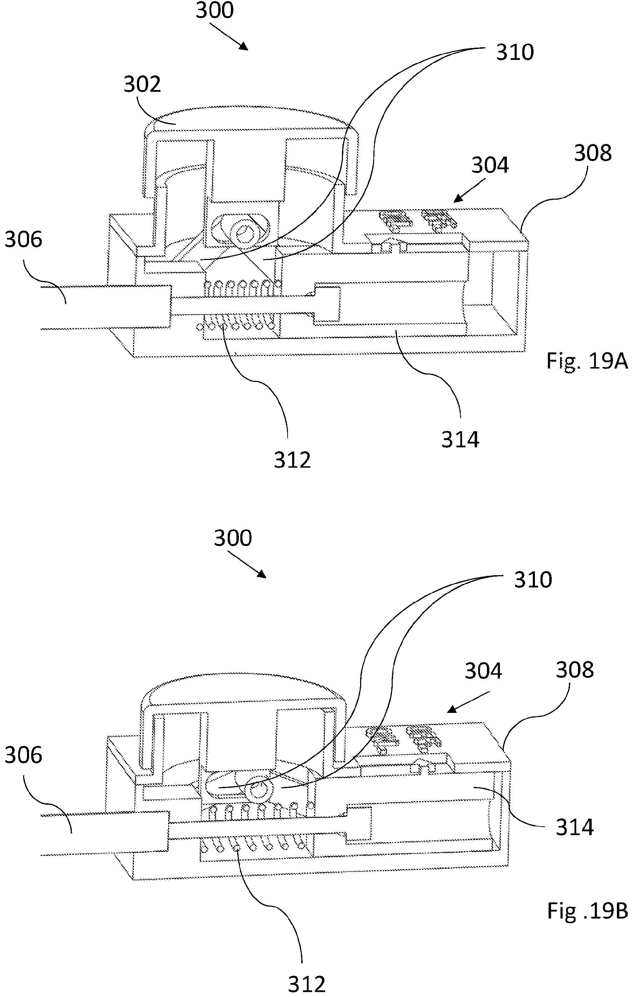

Figs. 19A and 19B are cross-sectional drawings showing the remote terminal 300 in more detail. Within a housing 308 of the remote terminal 300 is located a pair of rotating arms 310 and a tensioning spring 312 which is arranged to maintain the button position once the bypass plate 274 is in the not return position and to ensure the indicator 304 is correctly registering lever position and valve state. The rotating arms 310 translate a vertical movement of the button 302 to a horizontal movement of the Bowden cable carrier 314. This spring 312 must be lower in force than the side button springs 271a, 271b so that the button remains in the up position when the bypass plate is in the locked position.

The button 302 only returns to the up position once the valve is turned to the open position, i.e. when the gas is on. In this position, the bypass plate 274 can return under the action of the side button springs to the locked position. The side button springs 271a, 271b push the side buttons 270a, 270b outwards, and pivot around their connection point with the housing of the actuation unit 216. This pushes the bypass plate 274 forwards, back to the locked position.

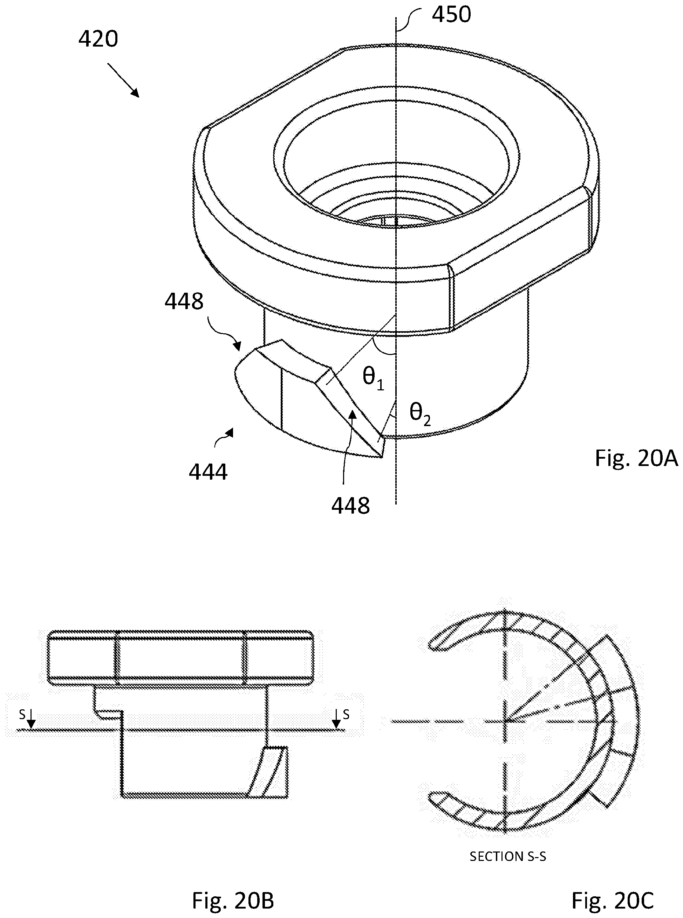

Figs. 20A-C are cross-sectional drawings that show an alternative mechanism that allows for the valve to be closed manually. In this arrangement, the button 420 has a curved triggering tab 444 that, when the valve 2 is in the open position, abuts a curved stop face on the main body assembly (not shown).

The tab 444 has a pair of curved side surfaces 448 which are each curved with respect to the axis 450 about which the valve rotates, such that the angle θ₁, θ₂ between the normal to the curved surfaces 448 and the axis 450 varies across the curved surfaces 448. The curved side surfaces 448 of the tab 444 abut corresponding curved side surfaces of the stop face when the arbor is held by the latching mechanism. The curved side surfaces 448 of the tab 444 and the curved side surfaces of the stop face correspond to one another such that their sloped side surfaces substantially match one another, mating in a similar way to a coarse screw thread.

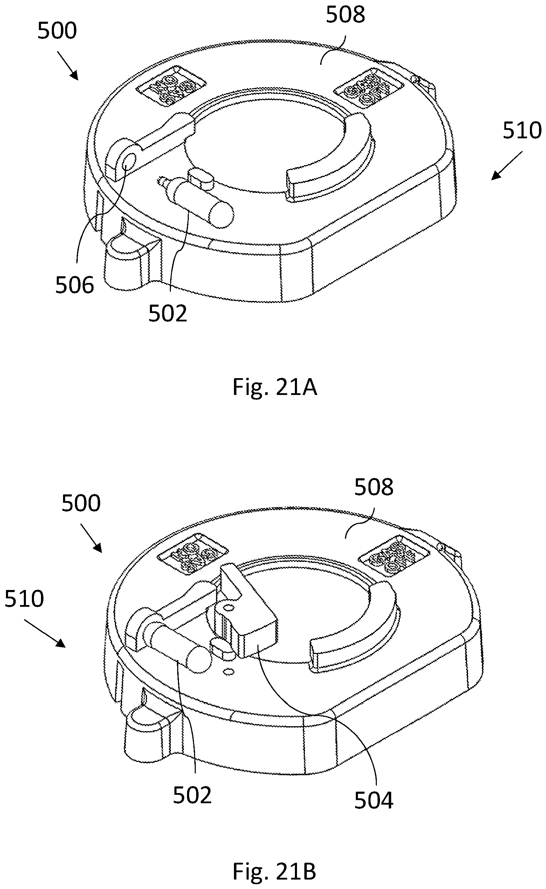

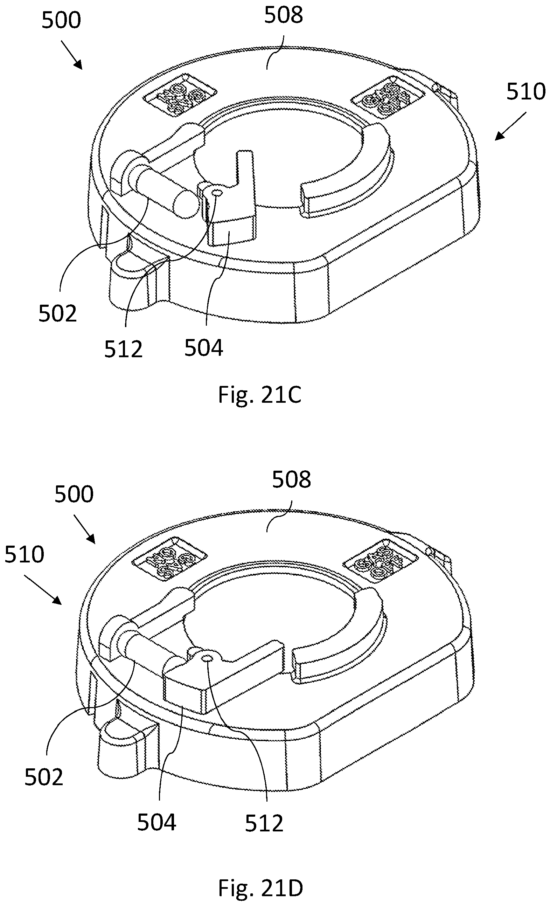

Figs. 21A-C are schematic drawings of an actuation unit 500 with a sacrificial triggering mechanism that uses a frangible glass bulb 502 in accordance with a further embodiment of the present invention.

In this particular arrangement, the sacrificial element which provides fire protection is a frangible glass bulb 502 arranged to break when exposed to a fire. When exposed to a temperature exceeding a threshold amount (i.e. a degree of heat associated with the presence of fire), a heat-sensitive fluid (typically a liquid) inside the glass bulb 502 rapidly expands, causing the bulb 502 to shatter. The temperature at which the bulb 502 breaks generally depends on the geometry of the bulb 502 and/or the composition of the fluid within the bulb 502.

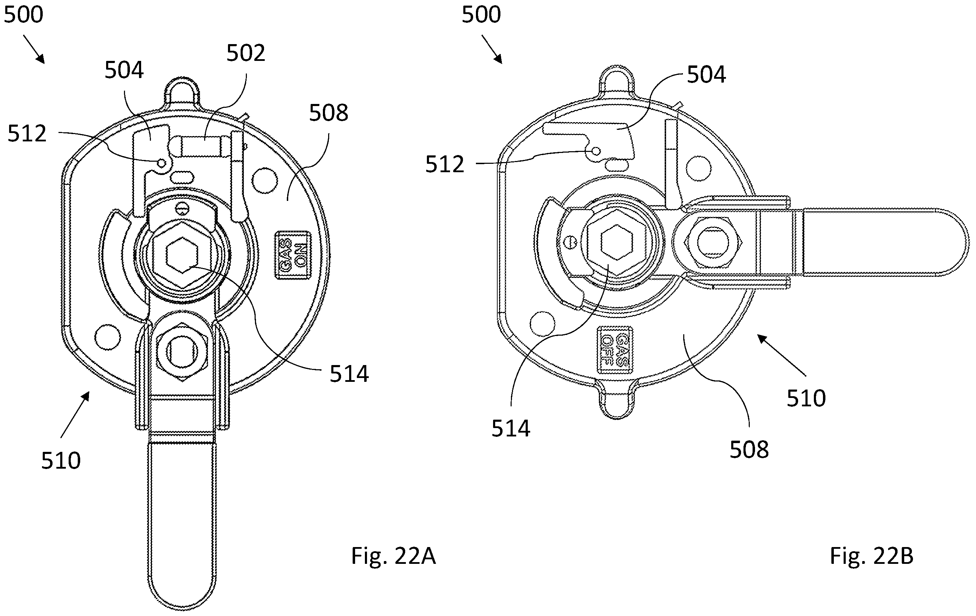

In addition to the latching mechanisms described previously, in this embodiment a pivot arm 504 is positioned between the glass bulb 502 and the arbor (i.e. the driving member) such that it is in contact with both when fully assembled, as shown in Figs. 22A and 22B. Specifically, when fully assembled, one side of the bulb 502 is held in contact with the pivot arm 504 (i.e. the bulb retainer).

The opposite side of the bulb 502, which is tapered, is held within a suitably sized milled slot 506 which is located on the lid 508 of the housing 510. Thus the milled slot 506 acts as a 'socket' for the bulb 502.

The pivot arm 504 is mounted to the lid 508 of the housing 510 via a suitable pivot point 512, e.g. a dowel or hinge point, such that the pivot arm 504 may rotate about the pivot point 512. Thus the pivot point 512 provides the axis of rotation for the pivot arm 504. The axis of the pivot point 512 is generally normal to the plane of the housing lid 508, and thus parallel to the axis of rotation of the valve.

Figs. 22A-B are further schematic drawings illustrating the operation of the sacrificial glass bulb triggering mechanism of Figs. 21A-C. In particular, Fig. 22A shows the actuation unit 500 under normal operation, when the unit 500 is fully assembled. As can be seen in Fig. 22A, the pivot arm 504 is held in abutment between the glass bulb 502 and the arbor 514.

This pivot arm 504 is therefore 'wedged' between the bulb and the arbor 514 so as to prevent rotation of the arbor 514. Of course, the arbor 514 may still rotate in response to the other methods of releasing the latching mechanism outlined above as appropriate (e.g. in response to a button being pressed, a tab being pulled out, etc.). Thus so long as the glass bulb 502 remains intact (i.e. there has been no fire) the pivot arm 504 resists the rotational spring force being applied to the arbor 514 by the internal spring, where this rotational force has been discussed previously.

As can be seen in Fig. 22B, when exposed to sufficient heat (e.g. during a fire), the glass bulb breaks. As a result, the pivot arm 504 is then free to rotate and occupy space previously occupied by the glass bulb 502. With the resistance from the glass bulb 502 removed, the arbor 514 pushes the pivot arm 504 out of the way (i.e. it 'swings around' the pivot point 512) under the force from the spring within the actuation unit 500.

This results in the valve to which the actuation unit 500 is connected - which is mechanically coupled to the arbor 514 - to rotate in the manner described previously, thereby biasing the valve to the closed position. This may be particularly advantageous, for example, for shutting off the domestic gas supply during a fire, thereby limiting the risk of flammable gas from coming into contact with the flames.

Thus it will be appreciated that embodiments of the present invention provide an improved valve assembly in which the valve is retained in the open position until a triggering force is applied by a user, and which locks or latches only when the valve is in the open position such that it cannot be held at an intermediate position, improving safety for domestic gas supplies. Once triggered, the 'spring-loaded' actuation unit biases the valve to the closed position automatically, i.e. the user does not need to apply any torque to close off the valve. While specific embodiments of the invention have been described in detail, it will be appreciated by those skilled in the art that the embodiments described in detail are not limiting on the scope of the invention as defined by the accompanying claims.

## Claims

1. An actuation unit (16; 116; 216) for a valve assembly, the actuation unit comprising:
a torsion spring (34), a trigger member (20; 44; 44'; 220; 170a, 170b; 270a, 270b; 274), a latching mechanism (18; 510; 21; 21"; 121; 274) and a driving member (36; 136; 236; 514), said driving member (36; 136; 236; 514) being arranged to engage with an operating member (10) of a valve (2) to drive rotation of the operating member (10), wherein the torsion spring (34) applies a first torque to the driving member (36; 136; 236; 514) around an axis in a first rotational direction;
wherein an external second torque applied opposite to the first torque resets the valve (2) to an open position in which the driving member (36; 136; 236; 514) is held by the latching mechanism (18; 510; 21; 21"; 121; 274), thereby resisting the first torque of the torsion spring (34), said latching mechanism (18; 510; 21; 21"; 121; 274) being arranged to hold the driving member (36; 136; 236; 514) only when the valve (2) is in the open position;
wherein an external force applied to the trigger member (20; 44; 44"; 144; 444; 220; 170a, 170b; 270a, 270b; 274) releases the driving member (36; 136; 236; 514) such that it is no longer held by the latching mechanism (18; 510; 21; 21"; 121; 274), the first torque thereby rotating the driving member (36; 136; 236; 514) in the first rotational direction so as to drive rotation of the operating member (10) and mechanically bias the valve (2) to the closed position; and **characterised in that**:
the driving member (36; 136; 236; 514) is substantially annular.

2. The actuation unit (16; 116; 216) as claimed in claim 1, wherein the external force applied to the trigger member (20; 44; 44"; 144; 444; 220; 170a, 170b; 270a, 270b; 274) is a non-rotary force.

3. The actuation unit (16; 116; 216) as claimed in any preceding claim, wherein the trigger member comprises a button (20; 220; 170a, 170b; 270a, 270b), wherein the driving member (36; 136; 236; 514) is released when the button (20; 220; 170a, 170b; 270a, 270b) is pressed.

4. The actuation unit (16; 116; 216) as claimed in claim 3, wherein the button (20; 220; 170a, 170b; 270a, 270b) comprises a trigger spring (54; 171a, 171a; 271a, 271b) arranged to return the button (20; 220; 170a, 170b; 270a, 270b) to a normal position after it has been pressed, optionally wherein the actuation unit (16) comprises a selection of spacers arranged to be added in-line with the trigger spring (54; 171a, 171a; 271a, 271b) to adjust the amount of force needed to actuate the button (20; 220; 170a, 170b; 270a, 270b).

5. The actuation unit (16; 116; 216) as claimed in claim 3 or 4, wherein the trigger member comprises a top button (20; 220) positioned such that the top button (20; 220) is actuated by applying a longitudinal force to the top button (20; 220) in a direction parallel to the axis of the valve (2), optionally wherein the direction is along the axis of the valve (2).

6. The actuation unit (16; 116; 216) as claimed in any of claims 3 to 5, wherein the button (20; 220; 170a, 170b; 270a, 270b) comprises a button housing (21; 21"; 121), optionally wherein the latching mechanism comprises the button housing (21; 21"; 121).

7. The actuation unit (16; 116; 216) as claimed in any preceding claim, wherein the trigger member comprises a pull tab (274).; and wherein the pull tab comprises a latch member (274) against which the driving member (36; 136; 236; 514) is held when held by the latching mechanism, wherein a lateral movement of the pull tab (274) releases the driving member (36; 136; 236; 514).

8. The actuation unit (16; 116; 216) as claimed in claim 7, wherein a cord (306) is attached to the pull tab (274), wherein pulling the cord (306) applies the external force to the pull tab (274).

9. The actuation unit (16; 116; 216) as claimed in any preceding claim, wherein the driving member (36; 136; 236; 514) is seated inside the torsion spring (34).

10. The actuation unit (16; 116; 216) as claimed in any preceding claim, wherein the driving member (36; 136; 236; 514) comprises a substantially cylindrical component with a ridged portion arranged to hold the driving member (36; 136; 236; 514) in position when latched.

11. The actuation unit (16; 116; 216) as claimed in any preceding claim, comprising a housing (18; 510), wherein the driving member (36; 136; 236; 514) is held in abutment against at least a part of said housing (18; 510) when latched, optionally wherein the part of the housing (18; 510) against which the driving member (36; 136; 236; 514) is held when latched is a lid (19; 508) of the housing (18; 510).

12. The actuation unit (16; 116; 216) as claimed in any preceding claim, wherein the latching mechanism comprises a tab (44; 44"; 144; 444) that, when latched, is held in abutment against a stop face (46; 46"); and optionally wherein the stop face (46; 46") is provided on the housing (18; 510).

13. The actuation unit (16; 116; 216) as claimed in claim 12, wherein the tab (44; 44"; 144; 444) is provided on the driving member (36; 136; 2316; 514); or
wherein the tab (44; 44"; 144; 444) is provided on the trigger member (20; 44; 44"; 144; 444; 220; 170a, 170b; 270a, 270b), wherein the trigger member (20; 44; 44"; 144; 444; 220; 170a, 170b; 270a, 270b) mechanically engages the driving member (36; 136) such that both the trigger member (20; 44; 44"; 144; 444; 220; 170a, 170b; 270a, 270b) and driving member (36; 136; 236; 514) rotate about the axis of the valve (2) together.

14. The actuation unit (16; 116; 216) as claimed in claim 12 or 13, wherein the tab (44; 44"; 144; 444) comprises a chamfered side surface (48, 50) at an oblique angle to the axis about which the valve (2) rotates, wherein the chamfered side surface (48, 50) of the tab (44; 44"; 144; 444) abuts the stop face (46; 46") when the driving member (36; 136) is held by the latching mechanism (18; 510; 21; 21"; 121).

15. A valve assembly comprising:
a valve (2) having an open position and a closed position, said valve (2) being arranged to move between the open position and the closed position by rotating an operating member (10) of the valve (2) about an axis; and
the actuation unit (16; 116; 216) according to any preceding claim, wherein the driving member (36; 136; 236; 514) is arranged to engage with the operating member (10) of the valve (2) to drive rotation of the operating member (10);
wherein the driving member (36; 136; 236; 514) is configured to be centred on the axis of the valve (2).

## Patentansprüche

1. Betätigungseinheit (16; 116; 216) für eine Ventilanordnung, wobei die Betätigungseinheit umfasst:
eine Torsionsfeder (34), ein Auslöseelement (20; 44; 44'; 220; 170a, 170b; 270a, 270b; 274), einen Verriegelungsmechanismus (18; 510; 21; 21"; 121; 274) und ein Antriebselement (36; 136; 236; 514), wobei das Antriebselement (36; 136; 236; 514) angeordnet ist, um mit einem Betriebselement (10) eines Ventils (2) in Eingriff zu stehen, um eine Drehung des Betriebselements (10) anzutreiben, wobei die Torsionsfeder (34) ein erstes Drehmoment auf das Antriebselement (36; 136; 236; 514) um eine Achse in einer ersten Drehrichtung anlegt;
wobei ein äußeres zweites Drehmoment, das entgegengesetzt zum ersten Drehmoment angelegt wird, das Ventil (2) in eine offene Position zurücksetzt, in der das Antriebselement (36; 136; 236; 514) durch den Verriegelungsmechanismus (18; 510; 21; 21"; 121; 274) gehalten wird, wodurch es dem ersten Drehmoment der Torsionsfeder (34) widersteht, wobei der Verriegelungsmechanismus (18; 510; 21; 21"; 121; 274) angeordnet ist, um das Antriebselement (36; 136; 236; 514) nur dann zu halten, wenn das Ventil (2) in der offenen Position ist;
wobei eine an das Auslöseelement (20; 44; 44"; 144; 444; 220; 170a, 170b; 270a, 270b; 274) angelegte äußere Kraft das Antriebselement (36; 136; 236; 514) freigibt, sodass es nicht mehr durch den Verriegelungsmechanismus (18; 510; 21; 21"; 121; 274) gehalten wird, wodurch das erste Drehmoment das Antriebselement (36; 136; 236; 514) in die erste Drehrichtung dreht, um eine Drehung des Betriebselements (10) anzutreiben und das Ventil (2) mechanisch in die geschlossene Position vorzuspannen; und **dadurch gekennzeichnet, dass**:
das Antriebselement (36; 136; 236; 514) im Wesentlichen ringförmig ist.

2. Betätigungseinheit (16; 116; 216) nach Anspruch 1, wobei die an das Auslöseelement (20; 44; 44"; 144; 444; 220; 170a, 170b; 270a, 270b; 274) angelegte äußere Kraft eine nichtdrehende Kraft ist.

3. Betätigungseinheit (16; 116; 216) nach einem vorstehenden Anspruch, wobei das Auslöseelement einen Knopf (20; 220; 170a, 170b; 270a, 270b) umfasst, wobei das Antriebselement (36; 136; 236; 514) freigegeben wird, wenn der Knopf (20; 220; 170a, 170b; 270a, 270b) gedrückt wird.

4. Betätigungseinheit (16; 116; 216) nach Anspruch 3, wobei der Knopf (20; 220; 170a, 170b; 270a, 270b) eine Auslösefeder (54; 171a, 171a; 271a, 271b) umfasst, die angeordnet ist, um den Knopf (20; 220; 170a, 170b; 270a, 270b) in eine normale Position zurückzubringen, nachdem er gedrückt wurde, wobei die Betätigungseinheit (16) optional eine Auswahl von Abstandshaltern umfasst, die angeordnet sind, in einer Linie mit der Auslösefeder (54; 171a, 171a; 271a, 271b) hinzugefügt zu werden, um die zum Betätigen des Knopfes (20; 220; 170a, 170b; 270a, 270b) erforderliche Kraftmenge anzupassen.

5. Betätigungseinheit (16; 116; 216) nach Anspruch 3 oder 4, wobei das Auslöseelement einen oberen Knopf (20; 220) umfasst, der positioniert ist, sodass der obere Knopf (20; 220) durch Anlegen einer Längskraft an den oberen Knopf (20; 220) in einer Richtung parallel zur Achse des Ventils (2) betätigt wird, wobei die Richtung optional entlang der Achse des Ventils (2) verläuft.

6. Betätigungseinheit (16; 116; 216) nach einem der Ansprüche 3 bis 5, wobei der Knopf (20; 220; 170a, 170b; 270a, 270b) ein Knopfgehäuse (21; 21"; 121) umfasst, wobei der Verriegelungsmechanismus optional das Knopfgehäuse (21; 21"; 121) umfasst.

7. Betätigungseinheit (16; 116; 216) nach einem vorstehenden Anspruch, wobei das Auslöseelement eine Zuglasche (274) umfasst; und wobei die Zuglasche ein Verriegelungselement (274) umfasst, an dem das Antriebselement (36; 136; 236; 514) gehalten wird, wenn es vom Verriegelungsmechanismus gehalten wird, wobei eine seitliche Bewegung der Zuglasche (274) das Antriebselement (36; 136; 236; 514) freigibt.

8. Betätigungseinheit (16; 116; 216) nach Anspruch 7, wobei an der Zuglasche (274) eine Schnur (306) angebracht ist, wobei durch Ziehen an der Schnur (306) die äußere Kraft an die Zuglasche (274) angelegt wird.

9. Betätigungseinheit (16; 116; 216) nach einem vorstehenden Anspruch, wobei das Antriebselement (36; 136; 236; 514) innerhalb der Torsionsfeder (34) sitzt.

10. Betätigungseinheit (16; 116; 216) nach einem vorstehenden Anspruch, wobei das Antriebselement (36; 136; 236; 514) eine im Wesentlichen zylindrische Komponente mit einem geriffelten Abschnitt umfasst, der angeordnet ist, um das Antriebselement (36; 136; 236; 514), wenn es verriegelt ist, in Position zu halten.

11. Betätigungseinheit (16; 116; 216) nach einem vorstehenden Anspruch, die ein Gehäuse (18; 510) umfasst, wobei das Antriebselement (36; 136; 236; 514), wenn es verriegelt ist, an zumindest einem Teil des Gehäuses (18; 510) anliegend gehalten wird, wobei der Teil des Gehäuses (18; 510), an dem das Antriebselement (36; 136; 236; 514), wenn es verriegelt ist, gehalten wird, optional ein Deckel (19; 508) des Gehäuses (18; 510) ist.

12. Betätigungseinheit (16; 116; 216) nach einem vorstehenden Anspruch, wobei der Verriegelungsmechanismus eine Lasche (44; 44"; 144; 444) umfasst, die, wenn sie verriegelt ist, an einer Anschlagfläche (46; 46") anliegend gehalten wird; und wobei die Anschlagfläche (46; 46") optional am Gehäuse (18; 510) bereitgestellt ist.

13. Betätigungseinheit (16; 116; 216) nach Anspruch 12, wobei die Lasche (44; 44"; 144; 444) am Antriebselement (36; 136; 2316; 514) bereitgestellt ist; oder wobei die Lasche (44; 44"; 144; 444) am Auslöseelement (20; 44; 44"; 144; 444; 220; 170a, 170b; 270a, 270b) bereitgestellt ist, wobei das Auslöseelement (20; 44; 44"; 144; 444; 220; 170a, 170b; 270a, 270b) mechanisch mit dem Antriebselement (36; 136) in Eingriff steht, sodass sich beide, das Auslöseelement (20; 44; 44"; 144; 444; 220; 170a, 170b; 270a, 270b) und das Antriebselement (36; 136; 236; 514) gemeinsam um die Achse des Ventils (2) drehen.

14. Betätigungseinheit (16; 116; 216) nach Anspruch 12 oder 13, wobei die Lasche (44; 44"; 144; 444) eine abgeschrägte Seitenoberfläche (48, 50) in einem schrägen Winkel zur Achse umfasst, um die sich das Ventil (2) dreht, wobei die abgeschrägte Seitenoberfläche (48, 50) der Lasche (44; 44"; 144; 444) an der Anschlagfläche (46; 46") anliegt, wenn das Antriebselement (36; 136) durch den Verriegelungsmechanismus (18; 510; 21; 21"; 121) gehalten wird.

15. Ventilanordnung, umfassend:
ein Ventil (2), das eine offene Position und eine geschlossene Position aufweist, wobei das Ventil (2) angeordnet ist, um sich durch Drehen eines Betriebselements (10) des Ventils (2) um eine Achse zwischen der offenen Position und der geschlossenen Position zu bewegen; und
die Betätigungseinheit (16; 116; 216) nach einem vorstehenden Anspruch, wobei das Antriebselement (36; 136; 236; 514) angeordnet ist, um mit dem Betriebselement (10) des Ventils (2) in Eingriff zu stehen, um eine Drehung des Betriebselements (10) anzutreiben;
wobei das Antriebselement (36; 136; 236; 514) konfiguriert ist, um auf der Achse des Ventils (2) zentriert zu sein.

## Revendications

1. Unité d'actionnement (16 ; 116 ; 216) pour un ensemble de soupape, l'unité d'actionnement comprenant :
un ressort de torsion (34), un élément de déclenchement (20 ; 44 ; 44' ; 220 ; 170a, 170b ; 270a, 270b ; 274), un mécanisme de verrouillage (18 ; 510 ; 21 ; 21" ; 121 ; 274) et un élément d'entraînement (36 ; 136 ; 236 ; 514), ledit élément d'entraînement (36 ; 136 ; 236 ; 514) étant agencé pour venir en prise avec un élément de fonctionnement (10) d'une soupape (2) pour entraîner la rotation de l'élément de fonctionnement (10), dans laquelle le ressort de torsion (34) applique un premier couple à l'élément d'entraînement (36 ; 136 ; 236 ; 514) autour d'un axe dans une première direction de rotation ;
dans laquelle un second couple externe appliqué à l'opposé du premier couple ramène la soupape (2) dans une position ouverte, dans laquelle l'élément d'entraînement (36 ; 136 ; 236 ; 514) est maintenu par le mécanisme de verrouillage (18 ; 510 ; 21 ; 21" ; 121 ; 274), résistant ainsi au premier couple du ressort de torsion (34), ledit mécanisme de verrouillage (18 ; 510 ; 21 ; 21" ; 121 ; 274) étant agencé pour maintenir l'élément d'entraînement (36 ; 136 ; 236 ; 514) uniquement lorsque la soupape (2) est en position ouverte ;
dans laquelle une force externe appliquée à l'élément de déclenchement (20 ; 44 ; 44" ; 144 ; 444 ; 220 ; 170a, 170b ; 270a, 270b ; 274) libère l'élément d'entraînement (36 ; 136 ; 236 ; 514) de sorte qu'il n'est plus maintenu par le mécanisme de verrouillage (18 ; 510 ; 21 ; 21" ; 121 ; 274), le premier couple faisant ainsi tourner l'élément d'entraînement (36 ; 136 ; 236 ; 514) dans la première direction de rotation de manière à entraîner la rotation de l'élément de fonctionnement (10) et à solliciter mécaniquement la soupape (2) vers la position fermée ; et **caractérisée en ce que** :
l'élément d'entraînement (36 ; 136 ; 236 ; 514) est sensiblement annulaire.

2. Unité d'actionnement (16 ; 116 ; 216) selon la revendication 1, dans laquelle la force externe appliquée à l'élément de déclenchement (20 ; 44 ; 44" ; 144 ; 444 ; 220 ; 170a, 170b ; 270a, 270b ; 274) est une force non rotative.

3. Unité d'actionnement (16 ; 116 ; 216) selon une quelconque revendication précédente, dans laquelle l'élément de déclenchement comprend un bouton (20 ; 220 ; 170a, 170b ; 270a, 270b), dans laquelle l'élément d'entraînement (36 ; 136 ; 236 ; 514) est libéré lorsque le bouton (20 ; 220 ; 170a, 170b ; 270a, 270b) est enfoncé.

4. Unité d'actionnement (16 ; 116 ; 216) selon la revendication 3, dans laquelle le bouton (20 ; 220 ; 170a, 170b ; 270a, 270b) comprend un ressort de déclenchement (54 ; 171a, 171a ; 271a, 271b) conçu pour ramener le bouton (20 ; 220 ; 170a, 170b ; 270a, 270b) à une position normale après qu'il a été enfoncé, facultativement dans laquelle l'unité d'actionnement (16) comprend une sélection d'entretoises conçues pour être ajoutées en ligne avec le ressort de déclenchement (54 ; 171a, 171a ; 271a, 271b) pour ajuster la quantité de force nécessaire pour actionner le bouton (20 ; 220 ; 170a, 170b ; 270a, 270b).

5. Unité d'actionnement (16 ; 116 ; 216) selon la revendication 3 ou 4, dans laquelle l'élément de déclenchement comprend un bouton supérieur (20 ; 220) positionné de sorte que le bouton supérieur (20 ; 220) soit actionné en appliquant une force longitudinale au bouton supérieur (20 ; 220) dans une direction parallèle à l'axe de la soupape (2), facultativement dans laquelle la direction est le long de l'axe de la soupape (2).

6. Unité d'actionnement (16 ; 116 ; 216) selon l'une quelconque des revendications 3 à 5, dans laquelle le bouton (20 ; 220 ; 170a, 170b ; 270a, 270b) comprend un boîtier de bouton (21 ; 21" ; 121), facultativement dans laquelle le mécanisme de verrouillage comprend le boîtier de bouton (21 ; 21" ; 121).

7. Unité d'actionnement (16 ; 116 ; 216) selon une quelconque revendication précédente, dans laquelle l'élément de déclenchement comprend une languette de traction (274) ; et dans laquelle la languette de traction comprend un élément de verrouillage (274), contre lequel l'élément d'entraînement (36 ; 136 ; 236 ; 514) est maintenu lorsqu'il est maintenu par le mécanisme de verrouillage, dans laquelle un mouvement latéral de la languette de traction (274) libère l'élément d'entraînement (36 ; 136 ; 236 ; 514).

8. Unité d'actionnement (16 ; 116 ; 216) selon la revendication 7, dans laquelle un cordon (306) est attaché à la languette de traction (274), dans laquelle la traction du cordon (306) applique la force externe à la languette de traction (274).

9. Unité d'actionnement (16 ; 116 ; 216) selon une quelconque revendication précédente, dans laquelle l'élément d'entraînement (36 ; 136 ; 236 ; 514) est placé à l'intérieur du ressort de torsion (34).

10. Unité d'actionnement (16 ; 116 ; 216) selon une quelconque revendication précédente, dans laquelle l'élément d'entraînement (36 ; 136 ; 236 ; 514) comprend un composant sensiblement cylindrique avec une partie striée agencée pour maintenir l'élément d'entraînement (36 ; 136 ; 236 ; 514) en position lorsqu'il est verrouillé.

11. Unité d'actionnement (16 ; 116 ; 216) selon une quelconque revendication précédente, comprenant un boîtier (18 ; 510), dans laquelle l'élément d'entraînement (36 ; 136 ; 236 ; 514) est maintenu en butée contre au moins une partie dudit boîtier (18 ; 510) lorsqu'il est verrouillé, facultativement dans laquelle la partie du boîtier (18 ; 510), contre laquelle l'élément d'entraînement (36 ; 136 ; 236 ; 514) est maintenu lorsqu'il est verrouillé est un couvercle (19 ; 508) du boîtier (18 ; 510).

12. Unité d'actionnement (16 ; 116 ; 216) selon une quelconque revendication précédente, dans laquelle le mécanisme de verrouillage comprend une languette (44 ; 44" ; 144 ; 444) qui, lorsqu'elle est verrouillée, est maintenue en butée contre une face de butée (46 ; 46") ; et facultativement dans laquelle la face de butée (46 ; 46") est prévue sur le boîtier (18 ; 510).

13. Unité d'actionnement (16 ; 116 ; 216) selon la revendication 12, dans laquelle la languette (44 ; 44" ; 144 ; 444) est prévue sur l'élément d'entraînement (36 ; 136 ; 2316 ; 514) ; ou dans laquelle la languette (44 ; 44" ; 144 ; 444) est prévue sur l'élément de déclenchement (20 ; 44 ; 44" ; 144 ; 444 ; 220 ; 170a, 170b ; 270a, 270b), dans laquelle l'élément de déclenchement (20 ; 44; 44" ; 144 ; 444 ; 220 ; 170a, 170b ; 270a, 270b) vient en prise mécaniquement avec l'élément d'entraînement (36 ; 136) de sorte que l'élément de déclenchement (20 ; 44 ; 44" ; 144 ; 444 ; 220 ; 170a, 170b ; 270a, 270b) et l'élément d'entraînement (36 ; 136 ; 236 ; 514) tournent tous deux ensemble autour de l'axe de la soupape (2).

14. Unité d'actionnement (16 ; 116 ; 216) selon la revendication 12 ou 13, dans laquelle la languette (44 ; 44" ; 144 ; 444) comprend une surface latérale chanfreinée (48, 50) à un angle oblique par rapport à l'axe, autour duquel tourne la soupape (2), dans laquelle la surface latérale chanfreinée (48, 50) de la languette (44 ; 44" ; 144 ; 444) vient en butée contre la face de butée (46 ; 46") lorsque l'élément d'entraînement (36 ; 136) est maintenu par le mécanisme de verrouillage (18 ; 510 ; 21 ; 21" ; 121).

15. Ensemble de soupape comprenant :
une soupape (2) présentant une position ouverte et une position fermée, ladite soupape (2) étant conçue pour se déplacer entre la position ouverte et la position fermée en faisant tourner un élément de fonctionnement (10) de la soupape (2) autour d'un axe ; et
l'unité d'actionnement (16 ; 116 ; 216) selon une quelconque revendication précédente, dans lequel l'élément d'entraînement (36 ; 136 ; 236 ; 514) est conçu pour venir en prise avec l'élément de fonctionnement (10) de la soupape (2) pour entraîner la rotation de l'élément de fonctionnement (10) ;
dans lequel l'élément d'entraînement (36 ; 136 ; 236 ; 514) est configuré pour être centré sur l'axe de la soupape (2).
